(19) **Europäisches Patentamt**
**European Patent Office**
**Office européen des brevets**

(11) **EP 4 542 371 A1**

(12) **EUROPEAN PATENT APPLICATION**
published in accordance with Art. 153(4) EPC

(43) Date of publication:
**23.04.2025 Bulletin 2025/17**

(21) Application number: **23838439.0**

(22) Date of filing: **15.03.2023**

(51) International Patent Classification (IPC):
$G06F\ 3/16^{(2006.01)}$      $H04S\ 7/00^{(2006.01)}$

(52) Cooperative Patent Classification (CPC):
**G06F 3/16; H04S 7/00**

(86) International application number:
**PCT/CN2023/081669**

(87) International publication number:
**WO 2024/011937 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.07.2022 CN 202210813749**
**30.01.2023 CN 202310127907**

(71) Applicant: **Huawei Technologies Co., Ltd.**
**Shenzhen, Guangdong 518129 (CN)**

(72) Inventors:
• **KOU, Yiwei**
**Shenzhen, Guangdong 518129 (CN)**

• **QIN, Peng**
**Shenzhen, Guangdong 518129 (CN)**
• **LIN, Yuanpeng**
**Shenzhen, Guangdong 518129 (CN)**
• **FAN, Fan**
**Shenzhen, Guangdong 518129 (CN)**
• **ZHOU, Lei**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **AUDIO PROCESSING METHOD AND SYSTEM, AND ELECTRONIC DEVICE**

(57) Embodiments of this application provide an audio processing method and system, and an electronic device. The method includes: in response to a play operation of a user, performing spatial audio processing on an initial audio clip in a source audio signal to obtain an initial binaural signal, and playing the initial binaural signal; receiving a setting of the user for a rendering effect option, where the rendering effect option includes at least one of the following: a sound image position option, a distance perception option, or a spatial perception option; and performing spatial audio processing on an audio clip subsequent to the initial audio clip in the source audio signal based on the setting, to obtain a target binaural signal. In this way, in a process of playing an audio signal, a rendering effect of a binaural signal corresponding to the source audio signal can be continuously adjusted based on a setting of the user for the rendering effect.

EP 4 542 371 A1

Rendering effect

Sound
image     Distance     Spatial
position  perception  perception

521        522          523

(1)

S501                    S502  Setting of a                S503
                              user for a
                  Initial     rendering           Target
Play              binaural    effect option       binaural
operation         signal                          signal
         Spatial                    Setting                  Spatial
         audio                      receiving                audio
         processing                                          processing

Initial audio
clip in a source          Audio clip subsequent to the initial
audio signal              audio clip in the source audio signal

(2)

FIG. 5

## Description

This application claims priorities to Chinese Patent Application No. 202210813749.2, filed with the China National Intellectual Property Administration on July 12, 2022 and entitled "AUDIO PROCESSING METHOD AND SYSTEM, AND ELECTRONIC DEVICE", and to Chinese Patent Application No. 202310127907.3, filed with the China National Intellectual Property Administration on January 30, 2023 and entitled "AUDIO PROCESSING METHOD AND SYSTEM, AND ELECTRONIC DEVICE", both of which are incorporated herein by reference in their entireties.

## TECHNICAL FIELD

Embodiments of this application relate to the data processing field, and in particular, to an audio processing method and system, and an electronic device.

## BACKGROUND

A spatial audio technology may be used to render sound sources in different formats into binaural signals, so that a user can perceive a sound image position, and have distance perception and spatial perception in an audio when wearing earphones, and immersive audio listening experience can be brought to the user when the user uses the earphones.

For a binaural signal, different users have different listening senses and preferences. For example, when a user A listens to the binaural signal, a sound source position perceived by the user A is above a binaural horizontal plane, and the sound source position needs to be adjusted to the binaural horizontal plane. When a user B listens to the binaural signal, distance perception and spatial perception of the user B are poor, and the user B expects to enhance the distance perception and the spatial perception. However, a rendering effect of a binaural signal obtained through rendering in the conventional technology cannot be adjusted.

## SUMMARY

To resolve the foregoing technical problem, this application provides an audio processing method and system, and an electronic device. In the method, a rendering effect of a binaural signal can be adjusted based on a setting of a user for the rendering effect.

According to a first aspect, an embodiment of this application provides an audio processing method, where the method includes: first, in response to a play operation of a user, performing spatial audio processing on an initial audio clip in a source audio signal to obtain an initial binaural signal, and playing the initial binaural signal; then, receiving a setting of the user for a rendering effect option, where the rendering effect option includes at least one of the following: a sound image position option, a distance perception option, or a spatial perception option; and then, continuing to perform spatial audio processing on an audio clip subsequent to the initial audio clip in the source audio signal based on the setting, to obtain a target binaural signal.

In other words, after the user performs the play operation on the source audio signal, in response to the play operation of the user, spatial audio processing may be first performed on the initial audio clip in the source audio signal based on a setting of a system for the rendering effect option and/or a historical setting of the user for the rendering effect option, to obtain the initial binaural signal, and the initial binaural signal may be played. In a process of playing the initial binaural signal (that is, in a process in which the user listens to the initial binaural signal), when the user determines that a rendering effect does not meet a requirement of the user, the user may set the rendering effect option. In this case, spatial audio processing may continue to be performed on the audio clip subsequent to the initial audio clip in the source audio signal based on a current setting of the user for the rendering effect option, to obtain the target binaural signal.

It should be understood that, after the target binaural signal is obtained, the target binaural signal may be played. In a process of playing the target binaural signal (that is, in a process in which the user listens to the target binaural signal), when the user determines that a rendering effect does not meet a requirement of the user, the user may set the rendering effect option again. In this case, based on another setting of the user for the rendering effect option, spatial audio processing may continue to be performed on an audio clip, in the source audio signal, subsequent to an audio clip on which spatial audio processing is performed last time, to obtain a new target binaural signal. The rest may be deduced by analogy.

In this way, in a process of playing an audio signal, a rendering effect of a binaural signal corresponding to the source audio signal can be continuously adjusted based on a setting of the user for the rendering effect, that is, "adjusting while listening", thereby improving user experience.

In addition, personalized spatial audio processing may be further performed on the source audio signal based on a personalized requirement of the user for a spatial audio effect, to obtain the target binaural signal for earphone playing, so that the personalized requirement of the user for the spatial audio effect can be met.

In a possible implementation, the system may set the rendering effect option based on personal information of the user. For example, the system may analyze a head type of the user, a preferred rendering effect, and the like based on the personal information of the user, to set the rendering effect option.

In a possible implementation, the system may set the rendering effect option by default.

For example, the source audio signal is a media file. The source audio signal may be an audio signal of a song, an audio signal of an audio book, an audio signal included in a video, or the like. This is not limited in this application.

For example, each of the target binaural signal and the initial binaural signal may include a signal for left earphone playing and a signal for right earphone playing.

It should be understood that in addition to the foregoing rendering effect option, this application may further include another rendering effect option. This is not limited in this application.

For example, the sound image position option is used to adjust a sound image position in the target binaural signal. The sound image position may be an orientation of a sound subjectively perceived by the user relative to a head center.

For example, the distance perception option is used to adjust distance perception of a sound image in the target binaural signal. The distance perception may be a distance of a sound subjectively perceived by the user relative to the head center.

For example, the spatial perception option is used to adjust spatial perception of the target binaural signal. The spatial perception may be a size of acoustic environment space subjectively perceived by the user.

According to the first aspect, when the rendering effect option includes the sound image position option, the continuing to perform spatial audio processing on an audio clip subsequent to the initial audio clip in the source audio signal based on the setting, to obtain a target binaural signal includes: adjusting a sound image position parameter based on a setting for the sound image position option; performing direct sound rendering on the audio clip subsequent to the initial audio clip in the source audio signal based on the sound image position parameter, to obtain a first binaural signal; and determining the target binaural signal based on the first binaural signal. In this way, a sound image distance of the target binaural signal can be adjusted based on a personalized setting of the user for the sound image distance.

According to any one of the first aspect or the foregoing implementations of the first aspect, when the rendering effect option includes the distance perception option, the continuing to perform spatial audio processing on an audio clip subsequent to the initial audio clip in the source audio signal based on the setting, to obtain a target binaural signal includes: adjusting a distance perception parameter based on a setting for the distance perception option; performing early reflection rendering on the audio clip subsequent to the initial audio clip in the source audio signal based on the distance perception parameter, to obtain a second binaural signal; and determining the target binaural signal based on the second binaural signal. In this way, the distance perception of the sound image in the target binaural signal can be adjusted based on a personalized setting of the user for the distance perception.

According to any one of the first aspect or the foregoing implementations of the first aspect, when the rendering effect option includes the spatial perception option, the continuing to perform spatial audio processing on an audio clip subsequent to the initial audio clip in the source audio signal based on the setting, to obtain a target binaural signal includes: adjusting a spatial perception parameter based on a setting for the spatial perception option; performing late reflection rendering on the audio clip subsequent to the initial audio clip in the source audio signal based on the spatial perception parameter, to obtain a third binaural signal; and determining the target binaural signal based on the third binaural signal. In this way, the spatial perception of the target binaural signal can be adjusted based on a personalized setting of the user for the spatial perception.

According to any one of the first aspect or the foregoing implementations of the first aspect, when the rendering effect option further includes the sound image position option and the spatial perception option, the continuing to perform spatial audio processing on an audio clip subsequent to the initial audio clip in the source audio signal based on a setting, to obtain a target binaural signal further includes: adjusting a sound image position parameter based on a setting for the sound image position option, and performing direct sound rendering on the audio clip subsequent to the initial audio clip in the source audio signal based on the sound image position parameter, to obtain a first binaural signal; and adjusting a spatial perception parameter based on a setting for the spatial perception option, and performing late reflection rendering on the audio clip subsequent to the initial audio clip in the source audio signal based on the spatial perception parameter, to obtain a third binaural signal. The determining the target binaural signal based on the second binaural signal includes: performing audio mixing processing on the first binaural signal, the second binaural signal, and the third binaural signal, to obtain the target binaural signal. In this way, the sound image position, the distance perception of the sound image, and the spatial perception in the target binaural signal can be adjusted based on the personalized settings of the user for the acoustic position, the distance perception, and the spatial perception.

In addition, a direct sound part in the target binaural signal affects perception of the user on the sound image position, an early reflection part in the target binaural signal affects perception of the user on the sound image distance, and a late reflection part in the target binaural signal affects perception of the user on acoustic environment space. Therefore, in this application, direct sound rendering, early reflection rendering, and late reflection rendering are separately performed on the audio clip subsequent to the initial audio clip in the source audio signal, so that the sound image position, the distance perception, and the spatial perception can be restored with high precision, and a more realistic and immersive binaural rendering effect can be further achieved.

For example, the direct sound part in the target binaural signal is a part in the source audio signal that reaches human ears through a direct path (namely, the part that is directly propagated to the human ears in a form of a straight line without any reflection). The early reflection part in the target binaural signal is a former part in the source audio signal that reaches the human ears through a reflection path. The late reflection part in the target binaural signal is a latter part in the source audio signal that reaches the human ears through the reflection path.

According to any one of the first aspect or the foregoing implementations of the first aspect, when the rendering effect option further includes the sound image position option and the spatial perception option, the continuing to perform spatial audio processing on an audio clip subsequent to the initial audio clip in the source audio signal based on the setting, to obtain a target binaural signal further includes: adjusting a spatial perception parameter based on a setting for the spatial perception option; and performing late reflection rendering on the audio clip subsequent to the initial audio clip in the source audio signal based on the spatial perception parameter, to obtain a third binaural signal. The determining the target binaural signal based on the second binaural signal includes: performing audio mixing processing on the second binaural signal and the third binaural signal, to obtain a fourth binaural signal; adjusting a sound image position parameter based on a setting for the sound image position option, and performing direct sound rendering on the fourth binaural signal based on the sound image position parameter, to obtain a fifth binaural signal; and determining the target binaural signal based on the fifth binaural signal. In this way, the sound image position, the distance perception of the sound image, and the spatial perception in the target binaural signal can be adjusted based on the personalized settings of the user for the acoustic position, the distance perception, and the spatial perception.

In addition, in this application, direct sound rendering, early reflection rendering, and late reflection rendering are separately performed on the audio clip subsequent to the initial audio clip in the source audio signal, so that the sound image position, the distance perception, and the spatial perception can be restored with high precision, and a more realistic and immersive binaural rendering effect can be further achieved.

According to any one of the first aspect or the foregoing implementations of the first aspect, the performing direct sound rendering on the audio clip subsequent to the initial audio clip in the source audio signal based on the sound image position parameter, to obtain a first binaural signal includes: selecting a candidate direct sound RIR (Room Impulse Response, room impulse response) from a preset direct sound RIR library, and determining a sound image position correction factor based on the sound image position parameter; correcting the candidate direct sound RIR based on the sound image position correction factor, to obtain a target direct sound RIR; and performing direct sound rendering on the audio clip subsequent to the initial audio clip in the source audio signal based on the target direct sound RIR, to obtain the first binaural signal.

According to any one of the first aspect or the foregoing implementations of the first aspect, the direct sound RIR library includes a plurality of first sets, one first set corresponds to one head type, and the first set includes preset direct sound RIRs at a plurality of positions. The selecting a candidate direct sound RIR from a preset direct sound RIR library includes: selecting a first target set from the plurality of first sets based on a head type of the user; and selecting the candidate direct sound RIR from the first target set based on head position information of the user, position information of the source audio signal, and position information of the preset direct sound RIR in the first target set. In this way, head tracking rendering can be implemented.

According to any one of the first aspect or the foregoing implementations of the first aspect, before the receiving a setting of the user for a rendering effect option, the method further includes: obtaining selection for a target scenario option, and displaying a rendering effect option corresponding to the target scenario option. One target scenario option corresponds to one space scenario. In this way, a space scenario for playing a binaural signal may be set, thereby increasing diversity of spatial audio effect settings.

For example, the obtaining selection for a target scenario option may include: receiving a selection operation performed by the user on the target scenario option. In this way, the user can be provided with a choice of the space scenario for playing a binaural signal, thereby increasing diversity of spatial audio effect settings. In addition, different target scenario options correspond to different rendering effect options, and the user may set different rendering effects for different space scenarios, to implement refined adjustment of a spatial audio effect.

For example, the obtaining selection for a target scenario option may be selection of a system of an electronic device for the target scenario option. For example, the system may select a target scenario based on the personal information of the user. For example, the system may select the target scenario based on the personal information of the user by analyzing a space scenario preferred by the user and the like.

For example, the target scenario option may include any one of the following: a cinema option, a recording studio option, a concert hall option, a KTV (Karaoke TV, Karaoke) option, and the like. A space scenario corresponding to the cinema option is a cinema, a space scenario corresponding to the recording studio option is a recording studio, a space scenario corresponding to the concert hall option is a concert hall, and a space scenario corresponding to the KTV option is a KTV.

It should be understood that the target scenario option may alternatively be another option. This is not limited in this application.

According to any one of the first aspect or the foregoing implementations of the first aspect, the performing early reflection rendering on the audio clip subsequent to the initial audio clip in the source audio signal based on the distance perception parameter, to obtain a second binaural signal includes: selecting a candidate early reflection RIR from a preset early reflection RIR library, and determining a distance perception correction factor based on the distance perception parameter; correcting the candidate early reflection RIR based on the distance perception correction factor, to obtain a target early reflection RIR; and performing early reflection rendering on the audio clip subsequent to the initial audio clip in the source audio signal based on the target early reflection RIR, to obtain the second binaural signal.

According to any one of the first aspect or the foregoing implementations of the first aspect, the early reflection RIR library includes a plurality of second sets, one second set corresponds to one space scenario, and the second set includes preset early reflection RIRs at a plurality of positions. The selecting a candidate early reflection RIR from a preset early reflection RIR library includes: selecting a second target set from the plurality of second sets based on a space scenario parameter corresponding to the target scenario option; and selecting the candidate early reflection RIR from the second target set based on head position information of the user, position information of the source audio signal, and position information of the preset early reflection RIR in the second target set. In this way, head tracking rendering can be implemented.

According to any one of the first aspect or the foregoing implementations of the first aspect, the performing late reflection rendering on the audio clip subsequent to the initial audio clip in the source audio signal based on the spatial perception parameter, to obtain a third binaural signal includes: selecting a candidate late reflection RIR from a preset late reflection RIR library, and determining a spatial perception correction factor based on the spatial perception parameter; correcting the candidate late reflection RIR based on the spatial perception correction factor, to obtain a target late reflection RIR; and performing late reflection rendering on the audio clip subsequent to the initial audio clip in the source audio signal based on the target late reflection RIR, to obtain the third binaural signal.

According to any one of the first aspect or the foregoing implementations of the first aspect, the late reflection RIR library includes a plurality of third sets, one third set corresponds to one space scenario, and the third set includes preset late reflection RIRs at a plurality of positions. The selecting a candidate late reflection RIR from a preset late reflection RIR library includes: selecting a third target set from the plurality of third sets based on a space scenario parameter corresponding to the target scenario option; and selecting the candidate late reflection RIR from the third target set based on head position information of the user, position information of the source audio signal, and position information of the preset late reflection RIR in the third target set. In this way, head tracking rendering can be implemented.

According to any one of the first aspect or the foregoing implementations of the first aspect, determining the target binaural signal based on the first binaural signal, the second binaural signal, and the third binaural signal includes: determining, based on a preset relationship, an audio effect parameter group matching the space scenario parameter, where the preset relationship includes relationships between a plurality of space scenarios and a plurality of audio effect parameter groups, and the audio effect parameter group matching the space scenario parameter includes an audio effect parameter of a direct sound, an audio effect parameter of an early reflection, and an audio effect parameter of a late reflection; performing audio effect processing on the first binaural signal based on the audio effect parameter of the direct sound, performing audio effect processing on the second binaural signal based on the audio effect parameter of the early reflection, and performing audio effect processing on the third binaural signal based on the audio effect parameter of the late reflection; and determining the target binaural signal based on the first binaural signal obtained through audio effect processing, the second binaural signal obtained through audio effect processing, and the second binaural signal obtained through audio effect processing. In this way, the audio signal can be modified.

According to any one of the first aspect or the foregoing implementations of the first aspect, the source audio signal includes at least one of the following formats: a multi-channel format, a multi-object format, and an Ambisonics format.

For example, the Ambisonics format is a spherical harmonic surround sound field format.

According to any one of the first aspect or the foregoing implementations of the first aspect, the target direct sound RIR is an HRIR (Head Related Impulse Response, head related impulse response).

According to any one of the first aspect or the foregoing implementations of the first aspect, the target early reflection RIR is an HOA (High-Order Ambisonics, high-order Ambisonics) RIR. Compared with the conventional technology in which collection of recording of RIRs in all directions can be completed only after a plurality of times of collection, to produce an early reflection RIR, in this application, recording of RIRs in all directions is completed through one-time collection by using a spherical microphone, so that a workload of producing an early reflection RIR can be reduced.

According to any one of the first aspect or the foregoing implementations of the first aspect, the target late reflection RIR is an HOA RIR. Compared with the conventional technology in which collection of recording of RIRs in all directions can be completed only after a plurality of times of collection, to produce a late reflection RIR, in this application, recording of RIRs in all directions is completed through one-time collection by using a spherical microphone, so that a workload of producing a late reflection RIR can be reduced.

According to any one of the first aspect or the foregoing implementations of the first aspect, the audio processing method is applied to earphones, and the head position information is determined based on head motion information of the user collected by the earphones. Alternatively, the audio processing method is applied to a mobile terminal, and the head position information is obtained from earphones connected to the mobile terminal. Alternatively, the audio processing method is applied to a VR (Virtual Reality, virtual reality) device, and the head position information is determined based on head motion information of the user collected by the VR device.

It should be understood that, for an implementation and an effect of performing spatial audio processing on the initial audio clip in the source audio signal to obtain the initial binaural signal, refer to the implementation and the effect, described in any one of the implementations of the first aspect, of continuing to perform spatial audio processing on the audio clip subsequent to the initial audio clip in the source audio signal based on the setting to obtain the target binaural signal. Details are not described herein again.

According to a second aspect, an embodiment of this application provides an audio processing method. The method includes: obtaining a to-be-processed source audio signal; and performing direct sound rendering, early reflection rendering, and late reflection rendering on the source audio signal, to obtain a binaural signal. A direct sound part in the binaural signal affects perception of a user on a sound image position, an early reflection part in the binaural signal affects perception of the user on a sound image distance, and a late reflection part in the binaural signal affects perception of the user on acoustic environment space. Therefore, in this application, direct sound rendering, early reflection rendering, and late reflection rendering are separately performed on the source audio signal, so that the sound image position, the distance perception, and the spatial perception can be restored with high precision, and a more realistic and immersive binaural rendering effect can be further achieved.

According to the second aspect, the performing direct sound rendering, early reflection rendering, and late reflection rendering on the source audio signal, to obtain a binaural signal includes: performing direct sound rendering on the source audio signal, to obtain a first binaural signal; performing early reflection rendering on the source audio signal, to obtain a second binaural signal; and performing late reflection rendering on the source audio signal, to obtain a third binaural signal; and determining the binaural signal based on the first binaural signal, the second binaural signal, and the third binaural signal.

According to any one of the second aspect or the foregoing implementations of the second aspect, the performing direct sound rendering, early reflection rendering, and late reflection rendering on the source audio signal, to obtain a binaural signal includes: performing early reflection rendering on the source audio signal, to obtain the second binaural signal; performing late reflection rendering on the source audio signal, to obtain the third binaural signal; performing audio mixing processing on the second binaural signal and the third binaural signal, to obtain a fourth binaural signal; performing direct sound rendering on the fourth binaural signal, to obtain a fifth binaural signal; and determining the binaural signal based on the fifth binaural signal.

According to any one of the second aspect or the foregoing implementations of the second aspect, a room impulse response RIR used for direct sound rendering is a head related impulse response HRIR; an RIR used for early reflection rendering is an HOA RIR; and an RIR used for late reflection rendering is an HOA RIR. Compared with the conventional technology in which collection of recording of RIRs in all directions can be completed only after a plurality of times of collection, to produce an early/a late reflection RIR, in this application, recording of RIRs in all directions is completed through one-time collection by using a spherical microphone, so that a workload of producing an early/a late reflection RIR can be reduced.

According to any one of the second aspect or the foregoing implementations of the second aspect, the source audio signal includes at least one of the following formats: a multi-channel format, a multi-object format, and an Ambisonics format.

It should be understood that the to-be-processed source audio signal in any one of the second aspect and the implementations of the second aspect may be the initial audio clip in the source audio signal in any one of the first aspect and the implementations of the first aspect, and the binaural signal in any one of the second aspect and the implementations of the second aspect may be an initial binaural signal.

It should be understood that the to-be-processed source audio signal in any one of the second aspect and the implementations of the second aspect may be the audio clip subsequent to the initial audio clip in the source audio signal in any one of the first aspect and the implementations of the first aspect. The binaural signal in any one of the second aspect and the implementations of the second aspect may be a target binaural signal.

According to a third aspect, this application provides an audio processing system. The audio processing system includes a mobile terminal and earphones connected to the mobile terminal.

The mobile terminal is configured to: in response to a play operation of a user, perform spatial audio processing on an initial audio clip in a source audio signal to obtain an initial binaural signal, and play the initial binaural signal, where the source audio signal is a media file; receive a setting of the user for a rendering effect option, where the rendering effect option includes at least one of the following: a sound image position option, a distance perception option, or a spatial perception option; continue to perform spatial audio processing on an audio clip subsequent to the initial audio clip in the source audio signal based on the setting, to obtain a target binaural signal; and send the target binaural signal to the earphones.

The earphones are configured to play the target binaural signal.

According to the third aspect, the earphones are further configured to: collect head motion information of the user, determine head position information of the user based on the head motion information, and send the head position information to the mobile terminal.

The mobile terminal is specifically configured to continue to perform spatial audio processing on the audio clip subsequent to the initial audio clip in the source audio signal based on the setting and the head position information, to obtain the target binaural signal.

For example, the mobile terminal in the third aspect may be configured to perform the audio processing method according to any one of the first aspect and the implementations of the first aspect.

For example, the mobile terminal in the third aspect may be configured to perform the audio processing method according to any one of the second aspect and the implementations of the second aspect. This is not limited in this application.

According to a fourth aspect, an embodiment of this application provides a mobile terminal, configured to perform the audio processing method according to any one of the first aspect and the implementations of the first aspect.

Any one of the fourth aspect and the implementations of the fourth aspect corresponds to any one of the first aspect and the implementations of the first aspect. For technical effects corresponding to any one of the fourth aspect and the implementations of the fourth aspect, refer to technical effects corresponding to any one of the first aspect and the implementations of the first aspect. Details are not described herein again.

According to a fifth aspect, an embodiment of this application provides a mobile terminal, configured to perform the audio processing method according to any one of the second aspect and the implementations of the second aspect.

Any one of the fifth aspect and the implementations of the fifth aspect corresponds to any one of the second aspect and the implementations of the second aspect. For technical effects corresponding to any one of the fifth aspect and the implementations of the fifth aspect, refer to the technical effects corresponding to any one of the second aspect and the implementations of the second aspect. Details are not described herein again.

According to a sixth aspect, an embodiment of this application provides earphones, configured to perform the audio processing method according to any one of the first aspect and the implementations of the first aspect.

Any one of the sixth aspect and the implementations of the sixth aspect corresponds to any one of the first aspect and the implementations of the first aspect. For technical effects corresponding to any one of the sixth aspect and the implementations of the sixth aspect, refer to the technical effects corresponding to any one of the first aspect and the implementations of the first aspect. Details are not described herein again.

According to a seventh aspect, an embodiment of this application provides earphones, configured to perform the audio processing method according to any one of the second aspect and the implementations of the second aspect.

Any one of the seventh aspect and the implementations of the seventh aspect corresponds to any one of the second aspect and the implementations of the second aspect. For technical effects corresponding to any one of the seventh aspect and the implementations of the seventh aspect, refer to the technical effects corresponding to any one of the second aspect and the implementations of the second aspect. Details are not described herein again.

According to an eighth aspect, an embodiment of this application provides an electronic device, including a memory and a processor. The memory is coupled to the processor, the memory stores program instructions, and when the program instructions are executed by the processor, the electronic device is enabled to perform the audio processing method according to any one of the first aspect or the possible implementations of the first aspect.

Any one of the eighth aspect and the implementations of the eighth aspect corresponds to any one of the first aspect and the implementations of the first aspect. For technical effects corresponding to any one of the eighth aspect and the implementations of the eighth aspect, refer to the technical effects corresponding to any one of the first aspect and the implementations of the first aspect. Details are not described herein again.

According to a ninth aspect, an embodiment of this application provides an electronic device, including a memory and a processor. The memory is coupled to the processor, the memory stores program instructions, and when the program instructions are executed by the processor, the electronic device is enabled to perform the audio processing method according to any one of the second aspect or the possible implementations of the second aspect.

Any one of the ninth aspect and the implementations of the ninth aspect corresponds to any one of the second aspect and the implementations of the second aspect. For technical effects corresponding to any one of the ninth aspect and the implementations of the ninth aspect, refer to the technical effects corresponding to any one of the second aspect and the implementations of the second aspect. Details are not described herein again.

According to a tenth aspect, an embodiment of this application provides a chip, including one or more interface circuits and one or more processors. The interface circuit is configured to: receive a signal from a memory of an electronic device, and send the signal to the processor, where the signal includes computer instructions stored in the memory. When the processor executes the computer instructions, the electronic device is enabled to perform the audio processing method according to any one of the first aspect or the possible implementations of the first aspect.

Any one of the tenth aspect and the implementations of the tenth aspect corresponds to any one of the first aspect and the implementations of the first aspect. For technical effects corresponding to any one of the tenth aspect and the implementations of the tenth aspect, refer to the technical effects corresponding to any one of the first aspect and the implementations of the first aspect. Details are not described herein again.

According to an eleventh aspect, an embodiment of this application provides a chip, including one or more interface circuits and one or more processors. The interface circuit is configured to: receive a signal from a memory of an electronic device, and send the signal to the processor, where the signal includes computer instructions stored in the memory. When the processor executes the computer instructions, the electronic device is enabled to perform the audio processing method according to any one of the second aspect or the possible implementations of the second aspect.

Any one of the eleventh aspect and the implementations of the eleventh aspect corresponds to any one of the second aspect and the implementations of the second aspect. For technical effects corresponding to any one of the eleventh aspect and the implementations of the eleventh aspect, refer to the technical effects corresponding to any one of the second aspect and the implementations of the second aspect. Details are not described herein again.

According to a twelfth aspect, an embodiment of this application provides a computer-readable storage medium. The computer-readable storage medium stores a computer program, and when the computer program is run on a computer or a processor, the computer or the processor is enabled to perform the audio processing method according to any one of the first aspect or the possible implementations of the first aspect.

Any one of the twelfth aspect or the implementations of the twelfth aspect corresponds to any one of the first aspect or the implementations of the first aspect. For technical effects corresponding to any one of the twelfth aspect and the implementations of the twelfth aspect, refer to the technical effects corresponding to any one of the first aspect and the implementations of the first aspect. Details are not described herein again.

According to a thirteenth aspect, an embodiment of this application provides a computer-readable storage medium. The computer-readable storage medium stores a computer program, and when the computer program is run on a computer or a processor, the computer or the processor is enabled to perform the audio processing method according to any one of the second aspect or the possible implementations of the second aspect.

Any one of the thirteenth aspect and the implementations of the thirteenth aspect corresponds to any one of the second aspect and the implementations of the second aspect. For technical effects corresponding to any one of the thirteenth aspect and the implementations of the thirteenth aspect, refer to the technical effects corresponding to any one of the second aspect and the implementations of the second aspect. Details are not described herein again.

According to a fourteenth aspect, an embodiment of this application provides a computer program product. The computer program product includes a software program, and when the software program is executed by a computer or a processor, the computer or the processor is enabled to perform the audio processing method according to any one of the first aspect or the possible implementations of the first aspect.

Any one of the fourteenth aspect and the implementations of the fourteenth aspect corresponds to any one of the first aspect and the implementations of the first aspect. For technical effects corresponding to any one of the fourteenth aspect and the implementations of the fourteenth aspect, refer to the technical effects corresponding to any one of the first aspect and the implementations of the first aspect. Details are not described herein again.

According to a fifteenth aspect, an embodiment of this application provides a computer program product. The computer program product includes a software program, and when the software program is executed by a computer or a processor, the computer or the processor is enabled to perform the audio processing method according to any one of the second aspect or the possible implementations of the second aspect.

Any one of the fifteenth aspect and the implementations of the fifteenth aspect corresponds to any one of the second aspect and the implementations of the second aspect. For technical effects corresponding to any one of the fifteenth aspect and the implementations of the fifteenth aspect, refer to the technical effects corresponding to any one of the second aspect and the implementations of the second aspect. Details are not described herein again.

**BRIEF DESCRIPTION OF DRAWINGS**

FIG. 1a is a diagram of an example of an application scenario;

FIG. 1b is a diagram of an example of an application scenario;

FIG. 2 is a diagram of an example of an audio processing process;

FIG. 3a is a diagram of an example of an audio processing process;

FIG. 3b is a diagram of an example of an audio processing process;

FIG. 4a is a diagram of an example of an audio processing process;

FIG. 4b is a diagram of an example of an audio processing process;

FIG. 5 is a diagram of an example of a processing process;

FIG. 6 is a diagram of an example of a processing process;

FIG. 7a is a diagram of an example of an audio processing process;

FIG. 7b is a diagram of an example of an audio processing process;

FIG. 8a is a diagram of an example of an audio processing process;

FIG. 8b is a diagram of an example of an audio processing process;

FIG. 9 is a diagram of an example of an audio processing system; and

FIG. 10 is a diagram of a structure of an example of an apparatus.

## DESCRIPTION OF EMBODIMENTS

The following clearly and completely describes the technical solutions in embodiments of this application with reference to accompanying drawings in embodiments of this application. It is clear that the described embodiments are some but not all of embodiments of this application. All other embodiments obtained by persons of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example", "for example", or the like is intended to present a related concept in a specific manner.

In the description of embodiments of this application, unless otherwise specified, "a plurality of" means two or more than two. For example, a plurality of processing units are two or more processing units, and a plurality of systems are two or more systems.

For example, this application may be applied to a scenario of listening to an audio in a mobile terminal by using earphones.

For example, the earphones may be wireless earphones (for example, TWS (True Wireless Stereo, true wireless stereo) Bluetooth earphones, over-ear Bluetooth headphones, or neckband Bluetooth earphones), or may be wired earphones. This is not limited in this application. Correspondingly, a connection between the mobile terminal and the earphones may be a wireless connection, or may be a wired connection. This is not limited in this application.

For example, the mobile terminal may be a mobile phone, a tablet computer, a smartwatch, a personal notebook computer, or the like. This is not limited in this application.

For example, the audio in the mobile terminal listened to by using the earphones may be a song, an audio part in a video, an audio book, or the like. This is not limited in this application.

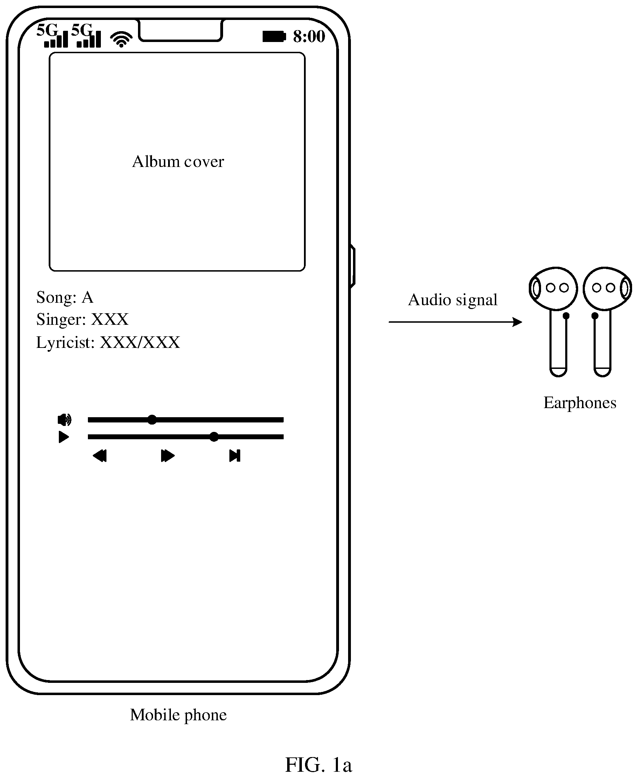

FIG. 1a is a diagram of an example of an application scenario. In FIG. 1a, the mobile terminal is a mobile phone, and the earphones are wireless earphones. FIG. 1a shows a scenario of listening to a song in the mobile phone by using the earphones.

Refer to FIG. 1a. For example, the earphones and the mobile phone remain connected. When a user wants to listen to a song A, the user may start an audio application in the mobile phone, search for the song A in the audio application, and perform a play operation. In this case, the mobile phone may send an audio signal of the song A to the earphones in response to the play operation, and the earphones play the audio signal. In this way, the user can listen to the song A in the earphones.

For example, this application may be applied to various VR (Virtual Reality, virtual reality) scenarios, such as a VR movie and a VR game. A VR device plays an audio, or earphones connected to the VR device play an audio.

For example, the VR device may include VR glasses, a VR helmet, and the like. This is not limited in this application.

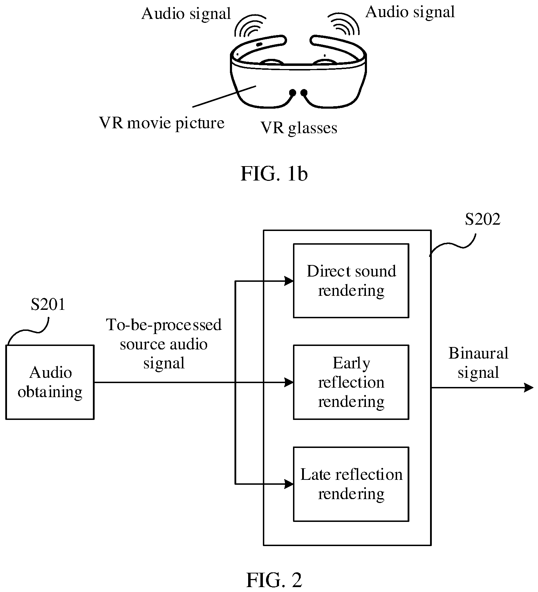

FIG. 1b is a diagram of an example of an application scenario. In FIG. 1b, the VR device is VR glasses. FIG. 1b shows a scenario of watching a VR movie by using the VR glasses.

Refer to FIG. 1b. For example, in a process of playing the VR movie on the VR glasses, a VR movie picture may be displayed on an inner side of lenses of the VR glasses, and an audio signal in the VR movie may be played on a speaker near a human ear on the VR glasses.

It should be understood that the VR glasses may be connected to the earphones. In this way, in the process of playing the VR movie on the VR glasses, the VR movie picture may be displayed on the inner side of the lenses of the VR glasses, and the audio signal in the VR movie may be sent to the earphones and played by the earphones. This is not limited in this application.

For example, this application provides an audio processing method, so that spatial audio processing can be performed on an audio signal, to obtain a binaural signal used for earphone playing. In this way, when a user wears earphones to listen to an audio, the user can perceive a sound image position, and have distance perception and spatial perception.

The sound image position may be an orientation of a sound subjectively perceived by the user relative to a head center. The distance perception may be a distance of the sound subjectively perceived by the user relative to the head center. The spatial perception may be a size of acoustic environment space subjectively perceived by the user.

FIG. 2 is a diagram of an example of an audio processing process.

S201: Obtain a to-be-processed source audio signal.

For example, a to-be-processed audio signal may be obtained, and the to-be-processed audio signal is referred to as a source audio signal.

For example, the source audio signal is a media file. The source audio signal may be an audio signal corresponding to a song, an audio signal corresponding to an audio book, an audio signal included in a video, or the like. This is not limited in this application.

S202: Separately perform direct sound rendering, early reflection rendering, and late reflection rendering on the source audio signal, to obtain a binaural signal.

For example, the source audio signal may be propagated to a human ear through a direct path, and may reach the human ear through a reflection path. A part of a sound wave that is of the source audio signal and that is propagated to the human ear through the direct path affects perception of the user on the sound image position. A former part of the sound wave that is of the source audio signal and that reaches the human ear through the reflection path (for example, a sound wave that reaches the human ear in a time range generally less than or equal to 50 ms or 95 ms after the human ear receives the part of the sound wave that is propagated to the human ear through the direct path, which is mainly generated through initial reflection or secondary reflection) affects perception of the user on a sound image distance. A latter part of the sound wave that is of the source audio signal and that reaches the human ear through reflection (for example, a sound wave that reaches the human ear in a time range generally greater than 50 ms or 95 ms after the human ear receives the part of the sound wave that is propagated to the human ear through the direct path, which is mainly generated through a plurality of times of reflection) affects perception of the user on acoustic environment space. Therefore, in this application, direct sound rendering, early reflection rendering, and late reflection rendering are separately performed on the source audio signal, so that the sound image position, the distance perception, and the spatial perception can be restored with high precision, and a more realistic and immersive binaural rendering effect can be further achieved.

For example, the binaural signal may include a signal for left earphone playing and a signal for right earphone playing.

Compared with the conventional technology in which only direct sound rendering is performed on the source audio signal, rendering is performed on the source audio signal after a direct sound and a reflection of the source audio signal are separated, or rendering is performed after the source audio signal is converted into a virtual speaker signal, in this application, the sound image position, the distance perception, and the spatial perception are restored with higher precision, so that a more realistic and immersive binaural rendering effect can be achieved.

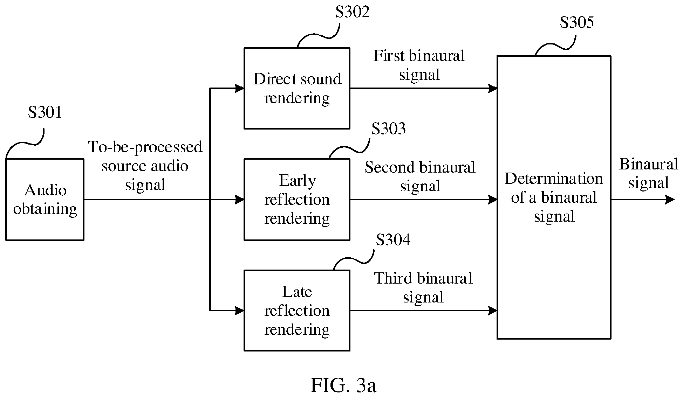

FIG. 3a is a diagram of an example of an audio processing process. An embodiment of FIG. 3a shows a manner of performing direct sound rendering, early reflection rendering, and late reflection rendering on a source audio signal.

S301: Obtain a to-be-processed source audio signal.

For example, for S301, refer to the descriptions of S201. Details are not described herein again.

For example, the source audio signal includes at least one of the following formats: a multi-channel format, a multi-object format, and an Ambisonics format (a spherical harmonic surround sound field format).

For example, if the source audio signal is in the multi-channel format, it may be assumed that the source audio signal includes n1 (n1 is an integer greater than 1) sound channels, and the source audio signal may be represented as follows:

$$\left[ ch_1\left(t, x_1, y_1, z_1\right), ch_2\left(t, x_2, y_2, z_2\right),...,ch_{n1}\left(t, x_{n1}, y_{n1}, z_{n1}\right)\right]$$

Herein, t represents time, and (x, y, z) represents a position of a sound source in a Cartesian coordinate system. $ch_1(t, x_1,y_1,z_1)$ represents an audio signal of a 1st sound channel, $ch_2(t,x_2,y_2,z_2)$ represents an audio signal of a 2nd sound channel, ..., and by analogy, $ch_{n1}(t,x_{n1},y_{n1},z_{n1})$ represents an audio signal of an (n1)th sound channel. A sound source position corresponding to each sound channel remains unchanged.

In a spherical coordinate system, the source audio signal may be represented as follows:

$$\left[ ch_1\left(t, r_1, \theta_1, \varphi_1\right), ch_2\left(t, r_2, \theta_2, \varphi_2\right),...,ch_{n1}\left(t, r_{n1}, \theta_{n1}, \varphi_{n1}\right)\right]$$

Herein, $(r,\theta,\varphi)$ represents a position of the sound source in the spherical coordinate system, and represents a distance, a horizontal angle, and a pitch angle separately. For unified description, the spherical coordinate system is used subsequently for representation.

For example, if the source audio signal is in the multi-object format, it may be assumed that the source audio signal includes n2 (n2 is an integer greater than 1) objects, and the source audio signal may be represented as follows:

$$\left[ obj_1\left(t, r_1, \theta_1, \varphi_1\right), obj_2\left(t, r_2, \theta_2, \varphi_2\right),...,obj_{n2}\left(t, r_{n2}, \theta_{n2}, \varphi_{n2}\right)\right]$$

Herein, t represents time, and $(r,\theta,\varphi)$ represents a position of the sound source in the spherical coordinate system. $obj_1(t,r_1,\theta_1,\varphi_1)$ represents an audio signal of a 1st object, $obj_2(t, r_2,\theta_2,\varphi_2)$ represents an audio signal of a 2nd object, ..., and by analogy, $obj_{n2}(t,r_{n2},\theta_{n2},\varphi_{n2})$ represents an audio signal of an (n2)th object. Each object is a moving sound source, and a position of an audio signal of each object changes over time. In other words, each object may include a plurality of groups of audio signals, and one group of audio signals corresponds to one position.

For example, if the source audio signal is in the Ambisonics format, it may be assumed that the source audio signal includes n3 (n3 is a positive integer greater than 1) channels, and the source audio signal may be represented as follows:

$$\left[ amb_1\left(t, r_1, \theta_1, \varphi_1\right), amb_2\left(t, r_2, \theta_2, \varphi_2\right),...,amb_{n3}\left(t, r_{n3}, \theta_{n3}, \varphi_{n3}\right)\right]$$

Herein, t represents time, and $(r, \theta,\varphi)$ represents a position of the sound source in the spherical coordinate system. $amb_1(t, r_1, \theta_1,\varphi_1)$ represents an audio signal of a 1st channel, $amb_2(t,r_2,\theta_2,\varphi_2)$ represents an audio signal of a 2nd channel, ..., and by analogy, $amb_{n3}(t,r_{n3},\theta_{n3},\varphi_{n3})$ represents audio data of an (n3)th channel. If Ambisonics is n-order Ambisonics, each channel may include $2^{n+1}$ groups of audio signals.

For ease of subsequent description, the source audio signals in the foregoing formats are uniformly represented as follows:

$$in\left(t, r_i, \theta_i, \varphi_i\right)$$

Herein, i represents a currently-processed audio signal in the source audio signals, $in(t, r_i,\theta_i,\varphi_i)$ represents an ith audio signal in the audio signals, and $(r_i,\theta_i, \varphi_i)$ indicates a position of the ith audio signal.

S302: Perform direct sound rendering on the source audio signal, to obtain a first binaural signal.

For example, a direct sound RIR (Room Impulse Response, room impulse response) library may be established in advance. For example, in a free field condition (for example, an anechoic chamber environment), an artificial head recording apparatus may be used in advance to separately collect responses made when a sound source is located at p1 (p1 is a positive integer) positions in the free field condition, to obtain direct sound RIRs (namely, HRIRs (Head Related Impulse Responses, head related impulse responses)) at the p1 positions. Then, the HRIRs at the p1 positions may be used to constitute the direct sound RIR library.

The direct sound RIR library may be represented as follows:

$$\left[ HRIR_{1-BIN}\left(t,r_1,\theta_1,\varphi_1\right), HRIR_{2-BIN}\left(t,r_2,\theta_2,\varphi_2\right),..., HRIR_{p1-BIN}\left(t,r_{p1},\theta_{p1},\varphi_{p1}\right)\right]$$

A subscript BIN indicates that the HRIR distinguishes left and right ears. In other words, the HRIR at each position includes two groups (namely, the HRIR of the left ear and the HRIR of the right ear). $HRIR_{1-BIN}(t, r_1,\theta_1,\varphi_1)$ represents a direct sound RIR at a 1st position, $HRIR_{2-BIN}(t, r_2,\theta_2,\varphi_2)$ represents a direct sound RIR at a 2nd position, ..., and by analogy, $HRIR_{p1-BIN}(t,rp_1,\theta_{p1},\varphi_{p1})$ represents a direct sound RIR at a (p1)th position.

For example, the direct sound RIR may be converted into a direct sound RIR in the Ambisonics format for storage. The direct sound RIR in the Ambisonics format may be represented by $HRIR_{BIN-AMB}$.

For example, convolution may be performed on the direct sound RIR and the source audio signal, so that direct sound rendering is performed on the source audio signal, to obtain the first binaural signal. For the ith audio signal of the source audio signal, direct sound rendering may be performed according to the following formula:

$$out_{1i}\left(t,r_i,\theta_i,\varphi_i\right) = in\left(t,r_i,\theta_i,\varphi_i\right) * HRIR_{BIN}\left(t,r_i,\theta_i,\varphi_i\right)$$

In the foregoing formula, "*" is convolution, $out_{1i}(t,r_i,\theta_i,\varphi_i)$ is an audio signal obtained by performing direct sound rendering on the ith audio signal of the source audio signal, and $HRIR_{BIN}(t,r_i,\theta_i,\varphi_i)$ is a direct sound RIR whose position corresponds to a position of $in(t,r_i,\theta_i,\varphi_i)$ in the direct sound RIR library.

If the source audio signal includes N (N is an integer greater than 1) channels, the first binaural signal $out_1(t)$ obtained by performing direct sound rendering on the source audio signal may be as follows:

$$out_1\left(t\right) = \sum_{i=1}^{N} in\left(t,r_i,\theta_i,\varphi_i\right) * HRIR_{BIN}\left(t,r_i,\theta_i,\varphi_i\right)$$

S303: Perform early reflection rendering on the source audio signal, to obtain a second binaural signal.

For example, an early reflection RIR library may be established in advance. For example, a spherical microphone may be used in an acoustic environment in advance to separately collect responses made when a sound source is located at p2 (p2 is a positive integer) positions in the acoustic environment, to obtain RIR data at the p2 positions. Then, a former part of impulse responses (namely, an early reflection part, which may be represented by ER (Early Reflections, early reflections)) of a reflection path between the sound source and the spherical microphone in the RIR data at the p2 positions is separately determined, to obtain early reflection RIRs (namely, HOA (High-Order Ambisonics, high-order Ambisonics) RIRs) at the p2 positions. Then, the early reflection RIRs at the p2 positions may be used to constitute the early reflection RIR library.

Compared with the conventional technology in which collection of recording of RIRs in all directions can be completed only after a plurality of times of collection, to produce an early reflection RIR library, in this application, recording of RIRs in all directions is completed through one-time collection by using the spherical microphone, so that a workload of producing the early reflection RIR library can be reduced.

The early reflection RIR library may be represented as follows:

$$\left[ ER_{1-AMB}\left(t,r_1,\theta_1,\varphi_1\right), ER_{2-AMB}\left(t,r_2,\theta_2,\varphi_2\right),..., ER_{p2-AMB}\left(t,r_{p2},\theta_{p2},\varphi_{p2}\right)\right]$$

AMB indicates that the ER is stored in the Ambisonics format, and an HOA RIR at each position may include $2^{n+1}$ groups.

$ER_{1-AMB}(t,r_1,\theta_1,\varphi_1)$ represents an early reflection RIR at a 1st position, $ER_{2-AMB}(t,r_2,\theta_2,\varphi_2)$ represents an early reflection RIR at a 2nd position, ..., and by analogy, $ER_{p2-AMB}(t,r_{p2},\theta_{p2},\varphi_{p2})$ represents an early reflection RIR at a (p2)th position.

For example, the early reflection RIR may be converted into an early reflection RIR in a BIN format for storage, and the early reflection RIR in the BIN format is calculated as follows:

$$ER_{BIN}\left(t,r,\theta,\varphi\right) = ER_{AMB}\left(t,r,\theta,\varphi\right) * HRIR_{BIN-AMB}\left(t,r,\theta,\varphi\right)$$

In the foregoing formula, "*" is convolution.

For example, convolution may be performed on the early reflection RIR and the source audio signal, so that early reflection rendering is performed on the source audio signal, to obtain the second binaural signal. For the $i^{th}$ audio signal of the source audio signal, early reflection rendering may be performed according to the following formula:

$$out_{2i}\left(t,r_i,\theta_i,\varphi_i\right) = in\left(t,r_i,\theta_i,\varphi_i\right) * ER_{BIN}\left(t,r_i,\theta_i,\varphi_i\right)$$

In the foregoing formula, "*" is convolution. $out_{2i}(t,r_i,\theta_i,\varphi_i)$ is an audio signal obtained by performing early reflection rendering on an $i^{th}$ piece of audio data of the source audio signal, and $ER_{BIN}(t,r_i,\theta_i,\varphi_i)$ is an early reflection RIR whose position corresponds to a position of $in(t,r_i,\theta_i,\varphi_i)$ in the early reflection RIR library.

If the source audio signal includes N (N is an integer greater than 1) channels, the second binaural signal $out_2(t)$ obtained by performing early reflection rendering on the source audio signal may be as follows:

$$out_2\left(t\right) = \sum_{i=1}^{N} in\left(t,r_i,\theta_i,\varphi_i\right) * ER_{BIN}\left(t,r_i,\theta_i,\varphi_i\right)$$

S304: Perform late reflection rendering on the source audio signal, to obtain a third binaural signal.

For example, a late reflection RIR library may be established in advance. For example, a spherical microphone may be used in advance in an acoustic environment to separately collect responses made when a sound source is located at p3 (p3 is a positive integer) positions in the acoustic environment, to obtain RIR data at the p3 positions. Then, a latter part of impulse responses (namely, a late reflection part, which may be represented by *LR* (Late Reflections, late reflections)) of a reflection path between the sound source and the spherical microphone in the RIR data at the p3 positions is separately determined, to obtain late reflection RIRs (namely, HOA RIRs) at the p3 positions. Then, the late reflection RIRs at the p3 positions may be used to constitute the late reflection RIR library.

Compared with the conventional technology in which collection of recording of RIRs in all directions can be completed only after a plurality of times of collection, to produce a late reflection RIR library, in this application, recording of RIRs in all directions is completed through one-time collection by using the spherical microphone, so that a workload of producing the late reflection RIR library can be reduced.

The RIR late reflection database may be represented as follows:

$$\left[LR_{1-AMB}\left(t,r_1,\theta_1,\varphi_1\right), LR_{2-AMB}\left(t,r_2,\theta_2,\varphi_2\right),..., LR_{p2-AMB}\left(t,r_{p3},\theta_{p3},\varphi_{p3}\right)\right]$$

AMB indicates that the LR is stored in the Ambisonics format, and a late reflection RIR at each position may include $2^{n+1}$ groups.

$LR_{1-AMB}(t,r_1,\theta_1,\varphi_1)$ represents a late reflection RIR at a 1st position, $LR_{2-AMB}(t,r_2,\theta_2,\varphi_2)$ represents a late reflection RIR at a 2nd position, ..., and by analogy, $LR_{p2-AMB}(t,r_{p2},\theta_{p2},\varphi_{p2})$ represents a late reflection RIR at a (p3)th position.

For example, the late reflection RIR may be converted into a late reflection RIR in the BIN format for storage, and the late reflection RIR in the BIN format is calculated as follows:

$$LR_{BIN}\left(t,r,\theta,\varphi\right) = LR_{AMB}\left(t,r,\theta,\varphi\right) * HRIR_{BIN-AMB}\left(t,r,\theta,\varphi\right)$$

In the foregoing formula, "*" is convolution.

For example, convolution may be performed on the late reflection RIR and the source audio signal, so that late reflection rendering is performed on the source audio signal, to obtain the third binaural signal. For the $i^{th}$ audio signal of the source audio signal, late reflection rendering may be performed according to the following formula:

$$out_{3i}\left(t,r_i,\theta_i,\varphi_i\right) = in\left(t,r_i,\theta_i,\varphi_i\right) * LR_{BIN}\left(t,r_i,\theta_i,\varphi_i\right)$$

In the foregoing formula, "*" is convolution. $out_{3i}(t,r_i,\theta_i,\varphi_i)$ is data obtained by performing late reflection rendering on the $i^{th}$ piece of audio data of the source audio signal, and $LR_{BIN}(t,r_i,\theta_i,\varphi_i)$ is audio data whose position corresponds to a position of $in(t,r_i,\theta_i,\varphi_i)$ in the late reflection RIR library.

If the source audio signal includes N (N is an integer greater than 1) channels, the third binaural signal $out_3(t)$ obtained by performing late reflection rendering on the source audio signal may be as follows:

$$out_3\left(t\right) = \sum_{i=1}^{N} in\left(t, r_i, \theta_i, \varphi_i\right) * LR_{BIN}\left(t, r_i, \theta_i, \varphi_i\right)$$

It should be noted that p1, p2, and p3 may be equal, or may be unequal. This is not limited in this application.

S305: Determine a binaural signal based on the first binaural signal, the second binaural signal, and the third binaural signal.

For example, audio mixing processing may be performed on the first binaural signal, the second binaural signal, and the third binaural signal, to obtain the binaural signal. Audio mixing processing may be performed according to the following formula:

$$out_B\left(t\right) = out_1\left(t\right) + out_2\left(t\right) + out_3\left(t\right)$$

Herein, $out_B(t)$ is the binaural signal.

It should be noted that an execution sequence of S302, S303, and S304 is not limited in this application. The three steps may be performed synchronously.

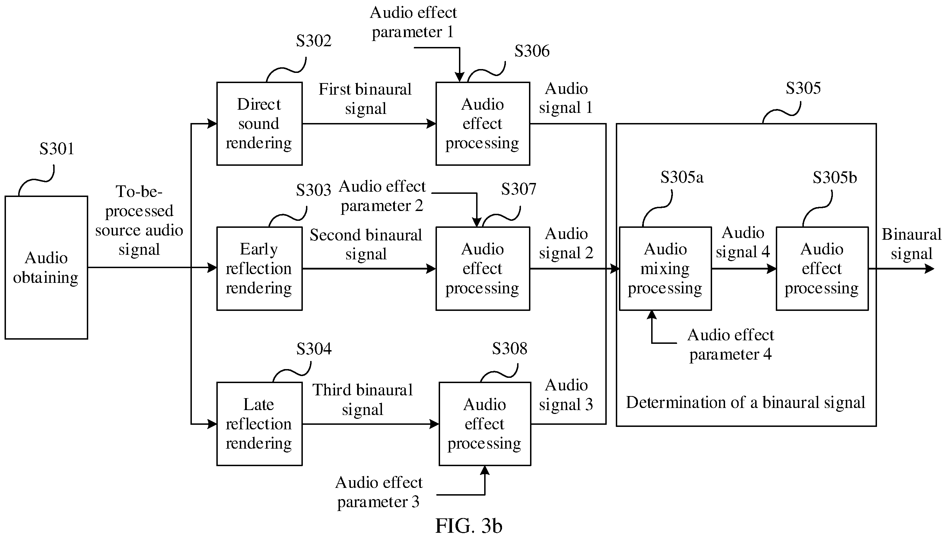

FIG. 3b is a diagram of an example of an audio processing process. Based on FIG. 3a, after the first binaural signal, the second binaural signal, and the third binaural signal are obtained, audio effect processing may be further performed on the first binaural signal, the second binaural signal, and the third binaural signal, to modify an audio.

Refer to FIG. 3b. For example, in S306, audio effect processing is performed on the first binaural signal based on a preset audio effect parameter 1, to obtain an audio signal 1.

For example, S306 may be performed after S302 and before S305. To be specific, after the first binaural signal is obtained, audio effect processing may be performed on the first binaural signal, to obtain the audio signal 1. For example, audio effect processing may be performed on the first binaural signal based on the preset audio effect parameter 1 (namely, a direct sound audio effect parameter, which may be a parameter used to perform audio effect processing on a direct sound part), to obtain the audio signal 1.

For example, a group of filters may be generated based on the preset audio effect parameter 1, and may be represented by $AudioEffects_{1-BIN}(t)$ ; and then, the first binaural signal is filtered by using $AudioEffects_{1-BIN}(t)$ , so that audio effect processing is performed on the first binaural signal, to obtain the audio signal 1 (which may be represented by $out_{1-BIN}(t)$). For the audio signal 1, refer to the following formula:

$$out_{1-BIN}\left(t\right) = out_1\left(t\right) * AudioEffects_{1-BIN}\left(t\right)$$

In the foregoing formula, "*" represents convolution.

Refer to FIG. 3b. For example, in S307, audio effect processing is performed on the second binaural signal based on a preset audio effect parameter 2, to obtain an audio signal 2.

For example, S307 is performed after S303 and before S305. To be specific, after the second binaural signal is obtained, audio effect processing may be performed on the second binaural signal, to obtain the audio signal 2. For example, audio effect processing may be performed on the second binaural signal based on the preset audio effect parameter 2 (namely, an early reflection audio effect parameter, which may be a parameter used to perform audio effect processing on an early reflection part), to obtain the audio signal 2.

For example, a group of filters may be generated based on the preset audio effect parameter 2, and may be represented by $AudioEffects_{2-BIN}(t)$ ; and then, the second binaural signal is filtered by using $AudioEffects_{2-BIN}(t)$, so that audio effect processing is performed on the second binaural signal, to obtain the audio signal 2 (which may be represented by $Out_{2-BIN}(t)$). For the audio signal 2, refer to the following formula:

$$out_{2-BIN}\left(t\right) = out_2\left(t\right) * AudioEffects_{2-BIN}\left(t\right)$$

In the foregoing formula, "*" represents convolution.

Refer to FIG. 3b. For example, in S308, audio effect processing is performed on the third binaural signal based on a preset audio effect parameter 3, to obtain an audio signal 3.

For example, S308 is performed after S304 and before S305. To be specific, after the third binaural signal is obtained, audio effect processing may be performed on the third binaural signal, to obtain the audio signal 3. For example, audio effect processing may be performed on the third binaural signal based on the preset audio effect parameter 3 (namely, a late reflection audio effect parameter, which may be a parameter used to perform audio effect processing on a late reflection part), to obtain the audio signal 3.

For example, a group of filters may be generated based on the preset audio effect parameter 3, and may be represented by $AudioEffects_{3\text{-}BIN}(t)$ ; and then, the third binaural signal is filtered by using

$AudioEffects_{3\text{-}BIN}(t)$, so that audio effect processing is performed on the third binaural signal, to obtain the audio signal 3 (which may be represented by $out_{3\text{-}BIN}(t)$). For the audio signal 3, refer to the following formula:

$$out_{3-BIN}\left(t\right) = out_3\left(t\right) * AudioEffects_{3-BIN}\left(t\right)$$

In the foregoing formula, "*" represents convolution.

Refer to FIG. 3b. For example, S305 may include S305a and S305b.

S305a: Perform audio mixing processing on the audio signal 1, the audio signal 2, and the audio signal 3, to obtain an audio signal 4.

S305b: Perform audio effect processing on the audio signal 4 based on a preset audio effect parameter 4, to obtain the binaural signal.

For example, audio effect processing may be performed on the audio signal 4 based on the preset audio effect parameter 4 (namely, a first mixed audio effect parameter, which may be a parameter used to perform audio effect processing on all of the direct sound part, the early reflection part, and the late reflection part), to obtain the binaural signal. For details, refer to the foregoing descriptions. Details are not described herein again.

It should be noted that all of the foregoing obtained first binaural signal, second binaural signal, third binaural signal, audio signal 1, audio signal 2, audio signal 3, and audio signal 4 are left-and-right-ear audio signals.

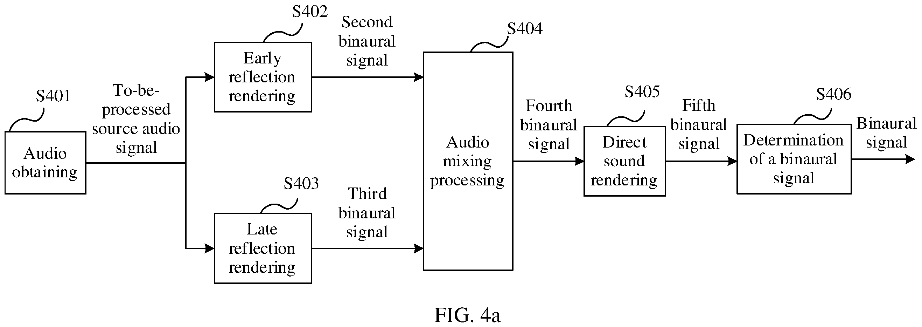

FIG. 4a is a diagram of an example of an audio processing process. An embodiment of FIG. 4a shows another manner of performing direct sound rendering, early reflection rendering, and late reflection rendering on a source audio signal.

S401: Obtain a to-be-processed source audio signal.

For example, for S401, refer to the descriptions of S301. Details are not described herein again.

S402: Perform early reflection rendering on the source audio signal, to obtain a second binaural signal.

For example, for S402, refer to the descriptions of S303. Details are not described herein again. For example, the second binaural signal is represented by $out_2(t)$.

S403: Perform late reflection rendering on the source audio signal, to obtain a third binaural signal.

For example, for S403, refer to the descriptions of S304. Details are not described herein again. For example, the third binaural signal is represented by $out_3(t)$.

S404: Perform audio mixing processing on the second binaural signal and the third binaural signal, to obtain a fourth binaural signal.

For example, audio mixing processing may be performed on the second binaural signal and the third binaural signal, to obtain the fourth binaural signal. For the fourth binaural signal, refer to the following formula:

$$out_4\left(t\right) = out_2\left(t\right) + out_3\left(t\right)$$

Herein, $out_4(t)$ is the fourth binaural signal.

S405: Perform direct sound rendering on the fourth binaural signal, to obtain a fifth binaural signal.

For example, for S405, refer to the descriptions of S302. Details are not described herein again.

S406: Determine a binaural signal based on the fifth binaural signal.

In a possible implementation, the fifth binaural signal is used as the binaural signal.

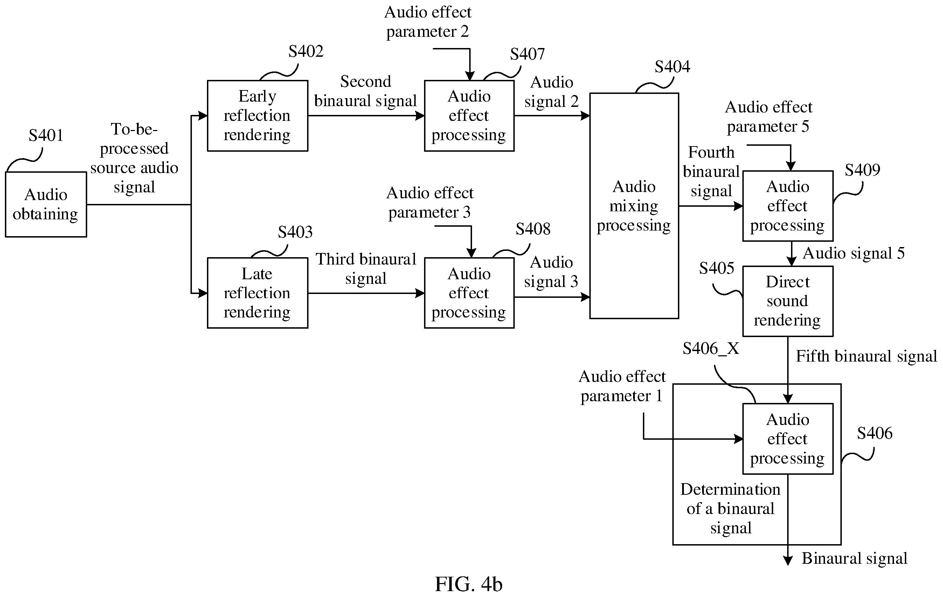

FIG. 4b is a diagram of an example of an audio processing process. Based on FIG. 4a, after the second binaural signal, the third binaural signal, the fourth binaural signal, and the fifth binaural signal are obtained, audio effect processing is performed on the second binaural signal, the third binaural signal, the fourth binaural signal, and the fifth binaural signal, to modify an audio.

Refer to FIG. 4b. For example, in S407, audio effect processing is performed on the second binaural signal based on a preset audio effect parameter 2, to obtain an audio signal 2.

For example, S407 is performed after S402 and before S404. To be specific, after the second binaural signal is obtained, audio effect processing may be performed on the second binaural signal, to obtain the audio signal 2. For details, refer to the descriptions of S307. Details are not described herein again.

Refer to FIG. 4b. For example, in S408, audio effect processing is performed on the third binaural signal based on a preset audio effect parameter 3, to obtain an audio signal 3.

For example, S408 is performed after S403 and before S404. To be specific, after the third binaural signal is obtained, audio effect processing may be performed on the third binaural signal, to obtain the audio signal 3. For details, refer to the descriptions of S308. Details are not described herein again.

In this way, S404 may include: performing audio mixing processing on the audio signal 2 and the audio signal 3, to obtain the fourth binaural signal.

Refer to FIG. 4b. For example, in S409, audio effect processing is performed on the fourth binaural signal based on a preset audio effect parameter 5, to obtain an audio signal 5.

For example, S409 is performed after S404 and before S405. To be specific, after the fourth binaural signal is obtained, audio effect processing may be performed on the fourth binaural signal, to obtain the audio signal 5. For example, audio effect processing may be performed on the fourth binaural signal based on the preset audio effect parameter 5 (namely, a second mixed audio effect parameter, which may be a parameter used to perform audio effect processing on an early reflection part and a late reflection part), to obtain the audio signal 5. For details, refer to the foregoing descriptions. Details are not described herein again. In this case, S405 may include: performing direct sound rendering on the audio signal 5, to obtain the fifth binaural signal.

Refer to FIG. 4b. For example, S406 may include S406_X. In S406_X, audio effect processing is performed on the fifth binaural signal based on a preset audio effect parameter 1, to obtain the binaural signal. For details, refer to the foregoing descriptions. Details are not described herein again.

It should be noted that all of the foregoing obtained second binaural signal, third binaural signal, fourth binaural signal, fifth binaural signal, audio signal 2, audio signal 3, and audio signal 5 are left-and-right-ear audio signals.

Based on the foregoing embodiments, this application provides an audio processing method, to support "adjusting while listening". To be specific, after a user performs a play operation on a source audio signal, in response to the play operation of the user, spatial audio processing may be first performed on an initial audio clip in the source audio signal based on a setting of a system for a rendering effect option and/or a historical setting of the user for the rendering effect option, to obtain an initial binaural signal, and the initial binaural signal may be played. In a process of playing the initial binaural signal (that is, in a process in which the user listens to the initial binaural signal), the user may be supported in setting a spatial audio effect; and then, spatial audio processing continues to be performed on an audio clip subsequent to the initial audio clip in the source audio signal based on the setting of the user for the spatial audio effect. In this way, in a process of playing an audio signal, a rendering effect of a binaural signal corresponding to the source audio signal can be continuously adjusted based on a setting of the user for the rendering effect, and a personalized requirement of the user for the spatial audio effect can be further met.

For example, the spatial audio effect may include the rendering effect, and the rendering effect may include a sound image position, distance perception, spatial perception, and the like. This is not limited in this application.

For example, this application may provide an application (or an applet, a web page, a toolbar, or the like) used to set the spatial audio effect.

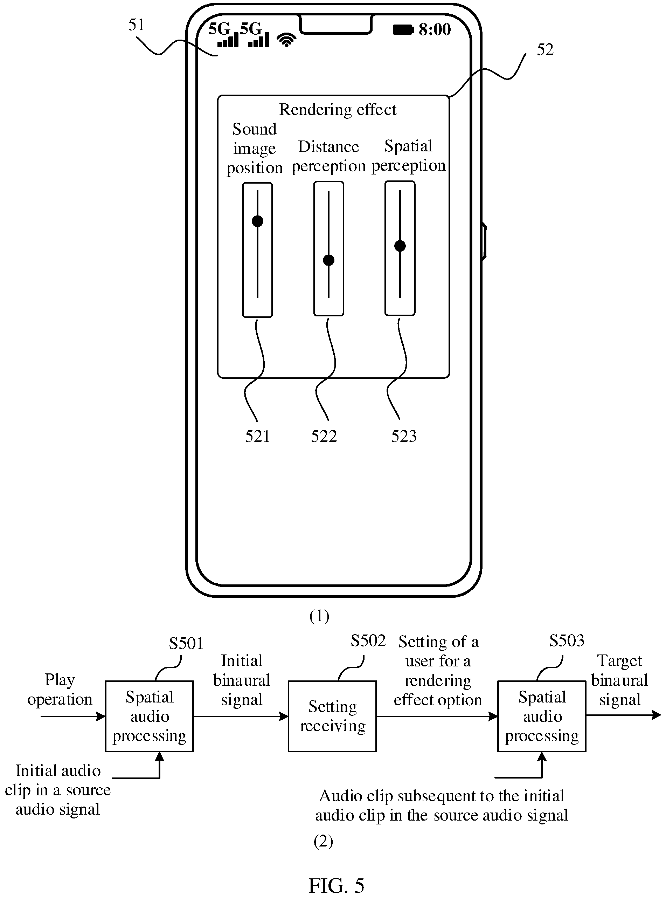

FIG. 5 is a diagram of an example of a processing process. (1) in FIG. 5 is a diagram of an example of an interface. It should be noted that a spatial audio effect setting interface 51 in (1) in FIG. 5 may be an interface set by a system, or may be an interface set by a user. This is not limited in this application. This application is described by using an example in which the user performs setting on the spatial audio effect setting interface 51 to adjust a spatial audio effect.

Refer to (1) in FIG. 5. For example, the spatial audio effect setting interface 51 may include one or more setting areas, including but not limited to a rendering effect setting area 52. This is not limited in this application.

For example, a plurality of rendering effect options may be set in the rendering effect setting area 52 based on different rendering effects. For example, there may be a plurality of rendering effects, such as a sound image position, distance perception, and spatial perception. Certainly, another rendering effect may be further included. This is not limited in this application. Refer to (1) in FIG. 5. For example, the rendering effect setting area 52 may include but is not limited to a sound image position option 521, a distance perception option 522, and a spatial perception option 523, and certainly may further include another rendering effect option. This is not limited in this application. In this application, an example in which the rendering effect setting area 52 includes the sound image position option 521, the distance perception option 522, and the spatial perception option 523 is used for description.

Refer to (1) in FIG. 5. For example, the sound image position option 521, the distance perception option 522, and the spatial perception option 523 may be slider controls. The slider control may include a slider.

For example, the user may perform an operation on a slider of the sound image position option 521, to raise or lower the sound image position. For example, when the user performs a slide-up operation on the slider of the sound image position option 521, the sound image position may be raised. When the user performs a slide-down operation on the slider of the sound image position option 521, the sound image position may be lowered.

For example, the user may perform an operation on a slider of the distance perception option 522, to increase or shorten the distance perception. For example, when the user performs a slide-up operation on the slider of the distance perception option 522, a distance between a sound image and the user may be increased. When the user performs a slide-down operation on the slider of the distance perception option 522, a distance between the sound image and the user may be shortened.

For example, the user may perform an operation on a slider of the spatial perception option 523, to increase or decrease the spatial perception. For example, when the user performs a slide-up operation on the slider of the spatial perception option 523, the spatial perception of the audio may be increased. When the user performs a slide-down operation on the slider of the spatial perception option 523, the spatial perception of the audio may be decreased.

It should be understood that (1) in FIG. 5 is merely an example of this application. The sound image position option 521, the distance perception option 522, and the spatial perception option 523 may be controls of other types, for example, knob controls (the knob control includes a knob). The user may rotate a knob of the sound image position option 521, to raise or lower the sound image position; rotate a knob of the distance perception option 522, to increase or shorten the distance perception; and rotate a knob of the spatial perception option 523, to increase or decrease the spatial perception. Display forms of the sound image position option 521, the distance perception option 522, and the spatial perception option 523 are not limited in this application.

Based on (1) in FIG. 5, the following describes an example of a process of performing spatial audio processing based on a setting operation performed by the user on the rendering effect option.

(2) in FIG. 5 is a diagram of an example of an audio processing process.

S501: In response to a play operation of the user, perform spatial audio processing on an initial audio clip in a source audio signal to obtain an initial binaural signal, and play the initial binaural signal, where the source audio signal is a media file.

For example, the source audio signal is a media file. The source audio signal may be an audio signal of a song, an audio signal of an audio book, an audio signal included in a video, or the like. This is not limited in this application.

Refer to FIG. 1a again. For example, when the user wants to listen to a song A, the user may start an audio application in the mobile phone, find the song A in the audio application, and perform the play operation. In this case, in response to the play operation of the user, spatial audio processing may be performed on an initial audio clip in an audio signal (namely, the source audio signal) corresponding to the song A, to obtain the initial binaural signal, and the initial binaural signal is played.

For example, the source audio signal may be divided into a plurality of audio clips in a preset manner. The preset manner may be set based on a requirement. For example, the source audio signal is divided into a plurality of audio clips with same duration. For another example, the source audio signal is divided into a preset quantity (which may be set based on a requirement) of audio clips. Then, the first X1 (X1 is a positive integer) audio clips in the plurality of audio clips included in the source audio signal may be determined as the initial audio clips. Then, spatial audio processing may be performed on the first X1 audio clips in the source audio signal based on the descriptions of the foregoing embodiments, to obtain the initial binaural signal.

In a possible implementation, spatial audio processing may be performed on the first X1 audio clips in the source audio signal based on a setting of a system for the rendering effect option, to obtain the initial binaural signal. The system may set the rendering effect options in advance. After the play operation of the user is received, spatial audio processing may be performed on the first X1 audio clips in the source audio signal based on the setting of the system, to obtain the initial binaural signal. For details, refer to the foregoing descriptions. Details are not described herein again.

In a possible implementation, spatial audio processing may be performed on the first X1 audio clips in the source audio signal based on a historical setting (for example, a previous setting) of the user for the rendering effect option, to obtain the initial binaural signal. After the play operation of the user is received, spatial audio processing may be performed on the first X1 audio clips in the source audio signal based on the previous setting of the user for the rendering effect option, to obtain the initial binaural signal. For details, refer to the foregoing descriptions. Details are not described herein again.

It should be understood that, when the user sets only some options in the sound image position option, the distance perception option, or the spatial perception option last time, spatial audio processing may be performed on the first X1 audio clips in the source audio signal based on settings of the user for a part of the rendering effect options and settings of the system for the other part of the rendering effect options, to obtain the initial binaural signal.

S502: Receive a setting of the user for the rendering effect option, where the rendering effect option includes at least one of the following: the sound image position option, the distance perception option, or the spatial perception option.

For example, in a process of playing the initial binaural signal, the user may listen to the initial binaural signal. When the user determines that the rendering effect does not meet a requirement of the user, the user may set the rendering effect option, that is, enter the spatial audio effect setting interface 51 in (1) in FIG. 5, and perform a setting operation on the rendering effect option, to set the rendering effect based on the requirement of the user.

For example, after entering the spatial audio effect setting interface 51, the user may perform a setting operation on at least one rendering effect option in the rendering effect setting area 52. For example, the user may perform a setting operation on at least one option in the sound image position option 521, the distance perception option 522, and the spatial perception option 523, to set any rendering effect in the sound image position, the distance perception, and the spatial perception during playing of the source audio signal.

It should be understood that, when the user determines that the rendering effect meets the requirement of the user, the user may not need to set the rendering effect option. In this case, if no setting of the user for the rendering effect option is received when the last audio clip in the initial audio clips is played, spatial audio processing may continue to be performed on X2 (X2 is a positive integer) audio clips subsequent to the initial audio clip in the source audio signal based on the setting of the system for the rendering effect option and/or the historical setting of the user for the rendering effect option, to obtain a new initial binaural signal. X2 may be set based on a requirement. This is not limited in this application. The X2 audio clips may be X2 consecutive audio clips subsequent to the first X1 audio clips in the source audio signal, and the 1st audio clip in the X2 audio clips is adjacent to the last audio clip in the first X1 audio clips.

S503: Continue to perform spatial audio processing on an audio clip subsequent to the initial audio clip in the source audio signal based on the setting, to obtain a target binaural signal.

For example, after the setting operation performed by the user on the rendering effect option is received, a corresponding rendering effect parameter may be adjusted based on the setting operation performed by the user on the rendering effect option; and then, spatial audio processing may continue to be performed on the audio clip subsequent to the initial audio clip in the source audio signal based on an adjusted rendering effect parameter, to obtain the target binaural signal for earphone playing. A specific spatial audio processing process is described below.

For example, before the setting of the user for the rendering effect option is received, spatial audio processing is performed on only the first X1 audio clips in the source audio signal. In this case, spatial audio processing may continue to be performed on X3 (X3 is a positive integer) audio clips subsequent to the first X1 audio clips in the source audio signal based on a current setting of the user for the rendering effect option, to obtain the target binaural signal for earphone playing. X3 may be set based on a requirement. This is not limited in this application. The X3 audio clips may be X3 consecutive audio clips subsequent to the first X1 audio clips in the source audio signal, and the 1st audio clip in the X3 audio clips is adjacent to the last audio clip in the first X1 audio clips.

For example, before the setting of the user for the rendering effect option is received, spatial audio processing is performed on the first X1+X2 audio clips in the source audio signal. In this case, spatial audio processing may continue to be performed on X3 (X3 is a positive integer) audio clips subsequent to the first X1+X2 audio clips in the source audio signal based on a current setting of the user for the rendering effect option, to obtain the target binaural signal for earphone playing. The X3 audio clips may be X3 consecutive audio clips subsequent to the first X1+X2 audio clips in the source audio signal, and the 1st audio clip in the X3 audio clips is adjacent to the last audio clip in the X2 audio clips.

It should be understood that, after the target binaural signal is obtained, the target binaural signal may be played. In a process of playing the target binaural signal (that is, in a process in which the user listens to the target binaural signal), when the user determines that the rendering effect does not meet the requirement of the user, the user may set the rendering effect option again. In this case, based on another setting of the user for the rendering effect option, spatial audio processing may continue to be performed on an audio clip, in the source audio signal, subsequent to an audio clip on which spatial audio rendering is performed last time, to obtain a new target binaural signal. The rest may be deduced by analogy.

In this way, in a process of playing an audio signal, a rendering effect of a binaural signal corresponding to the source audio signal can be continuously adjusted based on a setting for the rendering effect.

In addition, personalized spatial audio processing may be further performed on the source audio signal based on a personalized requirement of the user for a spatial audio effect, to obtain the target binaural signal for earphone playing, so that the personalized requirement of the user for the spatial audio effect can be met.

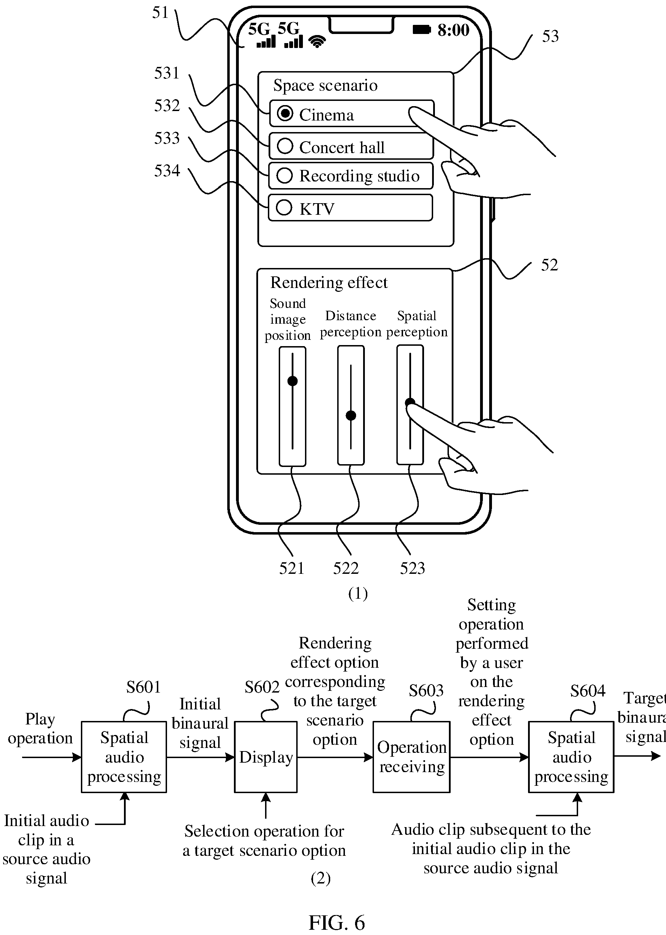

FIG. 6 is a diagram of an example of a processing process. (1) in FIG. 6 is a diagram of an example of an interface.

For example, a spatial audio effect may further include a space scenario. For example, different users have different requirements for a space scenario for playing an audio signal. For example, some users prefer a space scenario like a cinema, some users prefer a space scenario like a recording studio, and some users prefer a space scenario like a KTV. Further, as shown in (1) in FIG. 6, to meet the requirement of the user for the space scenario, a space scenario selection area 53 may be added to the spatial audio effect setting interface 51 in (1) in FIG. 5.

For example, a plurality of scenario options may be set in the space scenario selection area 53 based on different space scenarios. For example, there may be a plurality of the space scenarios, such as a cinema, a concert hall, a recording studio, and a KTV. Certainly, another space scenario may be further included. This is not limited in this application. Refer to (1) in FIG. 6. For example, the space scenario selection area 53 may include but is not limited to a cinema option 531, a concert hall option 532, a recording studio option 533, and a KTV option 534. Certainly, another scenario option may be further included. This is not limited in this application.

For example, when a space scenario that the user wants to select is a cinema, the user may select the cinema option 531 in the space scenario setting area 53. When the space scenario that the user wants to select is a concert hall, the user may select the concert hall option 532 in the space scenario setting area 53. When the space scenario that the user wants to select is a recording studio, the user may select the recording studio option 533 in the space scenario setting area 53. When the space scenario that the user wants to select is a KTV, the user may select the KTV option 534 in the space scenario setting area 53.

Refer to (1) in FIG. 6. For example, the rendering effect option in the rendering effect setting area 52 is associated with the scenario option in the space scenario selection area 53, and different scenario options correspond to different rendering effect options.

For example, after the user selects the cinema option 531 in the space scenario selection area 53, rendering effect options corresponding to the cinema option 531 may be displayed in the rendering effect setting area 52. After the user selects the concert hall option 532 in the space scenario selection area 53, rendering effect options corresponding to the concert hall option 532 may be displayed in the rendering effect setting area 52. After the user selects the recording studio option 533 in the space scenario selection area 53, rendering effect options corresponding to the recording studio option 533 may be displayed in the rendering effect setting area 52. After the user selects the KTV option 534 in the space scenario selection area 53, rendering effect options corresponding to the KTV option 534 may be displayed in the rendering effect setting area 52.

For example, that different scenario options correspond to different rendering effect options may mean that default parameter values of rendering effect parameters corresponding to the rendering effect options are different for different scenario options.

For example, for different scenario options, positions of sliders (or knobs) of the displayed rendering effect options may be the same or different. This is not limited in this application.

Based on (1) in FIG. 6, the following describes an example of a process of performing spatial audio processing based on a setting operation performed by the user on the rendering effect option.

(2) in FIG. 6 is a diagram of an example of an audio processing process.

S601: In response to a play operation of the user, perform spatial audio processing on an initial audio clip in a source audio signal to obtain an initial binaural signal, and play the initial binaural signal, where the source audio signal is a media file.

S602: In response to a selection operation performed by the user on a target scenario option, display a rendering effect option corresponding to the target scenario option.

S603: Receive a setting operation performed by the user on the rendering effect option, where the rendering effect option includes at least one of the following: a sound image position option, a distance perception option, or a spatial perception option.

For example, when the user needs to set a rendering effect, the user may enter the spatial audio effect setting interface 51 in (1) in FIG. 6, and then select a required target scenario option from the space scenario selection area 53. In this way, a terminal device may display, in the rendering effect setting area 52 in response to the selection operation performed by the user on the target scenario option, the rendering effect option corresponding to the target scenario option. Then, the user may perform a setting operation on at least one rendering effect option in the rendering effect setting area 52. For details, refer to the foregoing descriptions of S501. Details are not described herein again.

S604: Continue to perform spatial audio processing on an audio clip subsequent to the initial audio clip in the source audio signal based on the setting, to obtain a target binaural signal.

In a possible implementation, after the setting operation performed by the user on the rendering effect option is received, a rendering effect parameter may be adjusted based on the setting operation performed by the user on the rendering effect option; and then, spatial audio processing may be performed on the audio clip subsequent to the initial audio clip in the source audio signal based on an adjusted rendering effect parameter, to obtain the target binaural signal for earphone playing. Details are described below.

In a possible implementation, after the setting operation performed by the user on the rendering effect option is received, the rendering effect parameter may be adjusted based on the setting operation performed by the user on the rendering effect option, then, a scenario parameter is updated based on the target scenario option; and then, spatial audio processing is performed on the audio clip subsequent to the initial audio clip in the source audio signal based on an adjusted rendering effect parameter and an updated scenario parameter, to obtain the target binaural signal for earphone playing. Details are described below.

Based on FIG. 6, the following provides descriptions by using an example in which the user performs a setting operation on each of the sound image position option 521, the distance perception option 522, and the spatial perception option 523.

For example, with reference to the method described in the embodiment in FIG. 3a, direct sound rendering, early reflection rendering, and late reflection rendering are separately performed on the audio clip subsequent to the initial audio clip in the source audio signal, so that spatial audio processing in S603 can be implemented. To be specific, direct sound rendering, early reflection rendering, and late reflection rendering are separately performed on the audio clip subsequent to the initial audio clip in the source audio signal based on the setting, to obtain the target binaural signal. In this way, in any type of space scenario, a high-precision sound image position, and spatial perception and distance perception of an audio can be restored, and a more realistic and immersive binaural rendering effect can be further achieved.

The following describes a process of performing direct sound rendering, early reflection rendering, and late reflection rendering on the audio clip subsequent to the initial audio clip in the source audio signal based on the setting.

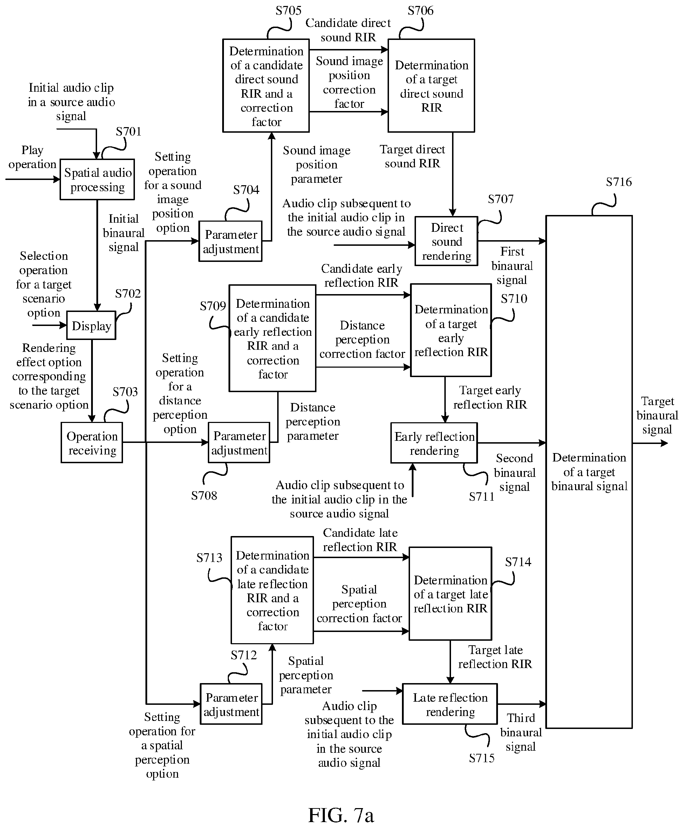

FIG. 7a is a diagram of an example of an audio processing process. An embodiment of FIG. 7a describes a manner of performing direct sound rendering, early reflection rendering, and late reflection rendering on an audio clip subsequent to an initial audio clip in a source audio signal.

S701: In response to a play operation of a user, perform spatial audio processing on the initial audio clip in the source audio signal to obtain an initial binaural signal, and play the initial binaural signal, where the source audio signal is a media file.

S702: In response to a selection operation performed by the user on a target scenario option, display a rendering effect option corresponding to the target scenario option.

S703: Receive a setting operation performed by the user on the rendering effect option, where the rendering effect option includes a sound image position option, a distance perception option, and a spatial perception option.

For example, for S701 to S703, refer to the descriptions of S601 to S603. Details are not described herein again.

S704: Adjust a sound image position parameter based on a setting operation for the sound image position option.

For example, a rendering effect parameter corresponding to the sound image position option may be referred to as the sound image position parameter.

Refer to (1) in FIG. 6. For example, a slider position of the sound image position option 521 may be determined based on a setting operation performed by the user on the sound image position option 521, and then the sound image position parameter may be adjusted based on the slider position of the sound image position option 521.

It should be noted that adjusting the sound image position parameter means adjusting a parameter value of the sound image position parameter.

For example, direct sound rendering is performed on the audio clip subsequent to the initial audio clip in the source audio signal based on the sound image position parameter, to obtain a first binaural signal. For details, refer to S705 to S707 below.

S705: Select a candidate direct sound RIR from a preset direct sound RIR library, and determine a sound image position correction factor based on the sound image position parameter.

S706: Correct the candidate direct sound RIR based on the sound image position correction factor, to obtain a target direct sound RIR.

S707: Perform direct sound rendering on the audio clip subsequent to the initial audio clip in the source audio signal based on the target direct sound RIR, to obtain the first binaural signal.

For example, a direct sound RIR library may be established in advance. For example, in a free field condition (for example, an anechoic chamber environment), an artificial head recording apparatus of a head type may be used in advance to separately collect responses made when a sound source is located at p1 (p1 is a positive integer) positions in the free field condition, to obtain direct sound RIRs (namely, HRIRs) at the p1 positions. Then, the HRIRs at the p1 positions may be used to constitute direct sound RIRs corresponding to a head type (for ease of description, the direct sound RIRs corresponding to a head type are referred to as a first set). The first set may be represented as follows:

$$\left[ HRIR_{1-BIN}\left(t,r_1,\theta_1,\varphi_1\right), HRIR_{2-BIN}\left(t,r_2,\theta_2,\varphi_2\right),..., HRIR_{p1-BIN}\left(t,r_{p1},\theta_{p1},\varphi_{p1}\right)\right]$$

One first set may include preset direct sound RIRs at the p1 positions.

Based on the foregoing manner, for m1 head types, m1 first sets may be obtained through recording, where m1 is a positive integer. Then, the m1 first sets are used to constitute the direct sound RIR library, and the direct sound RIR library may be represented as follows:

$$\left[ HRIR_{1-BIN}\left(t,r_1,\theta_1,\varphi_1\right), HRIR_{2-BIN}\left(t,r_2,\theta_2,\varphi_2\right),..., HRIR_{p1-BIN}\left(t,r_{p1},\theta_{p1},\varphi_{p1}\right)\right]_{1,2,...,m1}$$

For example, the head type may include but is not limited to a female head type, a male head type, an elderly head type, a middle-aged head type, an adolescent head type, a child head type, a European head type, and an Asian head type. This is not limited in this application.

For example, a first target set may be selected from the m1 first sets in the direct sound RIR library based on a head type of the user.

In a possible implementation, the head type of the user may be determined based on information like a gender and an age that are entered by the user when the user logs in to a system account. In a possible implementation, the spatial audio effect setting interface 51 in (1) in FIG. 6 may further include a head type setting area. The head type setting area includes a plurality of head type options, such as a female head type option, a male head type option, an elderly head type option, a middle-aged head type option, an adolescent head type option, a child head type option, a European head type option, and an Asian head type option. The user may select a corresponding head type option based on a situation of the user. In this way, the head type of the user may be determined based on the head type option selected by the user. In a possible implementation, different space scenarios correspond to different head types, and the head type of the user may be determined based on a space scenario parameter. In a possible implementation, the user may be prompted to use a mobile phone to shoot an image of the user's auricle; and then a head type most similar to that of the user may be searched for from a plurality of preset head types based on the image, shot by the user, of the user's auricle, and determined as the head type of the user.

For example, when head position information of the user cannot be obtained, the candidate direct sound RIR may be selected from the first target set based on position information of a currently-processed audio signal (namely, the audio clip subsequent to the initial audio clip in the source audio signal) in the source audio signal and position information of the preset direct sound RIRs at the p1 positions in the first target set. For example, a preset direct sound RIR whose position information is closest to the position information of the currently-processed audio signal (namely, the audio clip subsequent to the initial audio clip in the source audio signal) in the source audio signal may be selected from the first target set as the candidate direct sound RIR.

For example, when the head position information of the user may be obtained, the candidate direct sound RIR may be selected from the first target set based on the head position information of the user, the position information of the currently-processed audio signal (namely, the audio clip subsequent to the initial audio clip in the source audio signal) in the source audio signal, and the position information of the preset direct sound RIRs at the p1 positions in the first target set. For example, an offset value between the position information of the currently-processed audio signal (namely, the audio clip subsequent to the initial audio clip in the source audio signal) in the source audio signal and the head position information of the user may be determined, and then a preset direct sound RIR whose position information is closest to the offset value may be selected from the first target set as the candidate direct sound RIR. In this way, head tracking rendering can be implemented.

For example, the sound image position correction factor may be determined based on a parameter value of the adjusted sound image position parameter. For example, a relationship between the parameter value of the sound image position parameter and a corresponding sound image position correction factor may be established in advance, and then the relationship is searched for based on the parameter value of the adjusted sound image position parameter, to determine the corresponding sound image position correction factor. Then, the candidate direct sound RIR is corrected based on the sound image position correction factor, to obtain the target direct sound RIR. For the target direct sound RIR, refer to the following formula:

$$HRIR' = \alpha \cdot HRIR$$

$HRIR'$ is the target direct sound RIR, $\alpha$ is the sound image position correction factor, and $HRIR$ is the candidate direct sound RIR.

For example, $\alpha$ may be represented by a group of filters. A high-frequency part in the candidate direct sound RIR is attenuated, to lower the sound image position.

Further, the candidate direct sound RIR is corrected based on the sound image position correction factor, so that the sound image position can be adjusted, to obtain the target direct sound RIR.

For example, convolution may be performed on the target direct sound RIR and the audio clip subsequent to the initial audio clip in the source audio signal, so that direct sound rendering is performed on the audio clip subsequent to the initial audio clip in the source audio signal, to obtain the first binaural signal. For an audio clip $in (t, r_i, \theta_i, \varphi_i)$ subsequent to an initial audio clip in an $i^{th}$ audio signal of the source audio signal, direct sound rendering may be performed according to the following formula:

$$out_{1i}\left(t, r_i, \theta_i, \varphi_i\right) = in\left(t, r_i, \theta_i, \varphi_i\right) * HRIR_{BIN}'\left(t, r_i, \theta_i, \varphi_i\right)$$

In the foregoing formula, "*" represents convolution. $out_{1i}(t, r_i, \theta_i, \varphi_i)$ is an audio signal obtained by performing direct sound rendering on the audio clip subsequent to the initial audio clip in the $i^{th}$ piece of audio data of the source audio signal, and $HRIR_{BIN}'(t, r_i, \theta_i, \varphi_i)$ is the target direct sound RIR.

If the source audio signal includes N (N is an integer greater than 1) channels, the first binaural signal $out_1(t)$ obtained by performing direct sound rendering on a part corresponding to the audio clip subsequent to the initial audio clip in the source audio signal may be as follows:

$$out_1\left(t\right) = \sum_{i=1}^{n} in\left(t, r_i, \theta_i, \varphi_i\right) * HRIR_{BIN}'\left(t, r_i, \theta_i, \varphi_i\right)$$

S708: Adjust a distance perception parameter based on a setting operation for the distance perception option.

For example, a rendering effect parameter corresponding to the distance perception option may be referred to as the distance perception parameter.

Refer to (1) in FIG. 6. For example, a slider position of the distance perception option 522 may be determined based on a setting operation performed by the user on the distance perception option 522, and then the distance perception parameter is adjusted based on the slider position of the distance perception option 522.

It should be noted that adjusting the distance perception parameter means adjusting a parameter value of the distance perception parameter.

For example, early reflection rendering is performed on the audio clip subsequent to the initial audio clip in the source audio signal based on the distance perception parameter, to obtain a second binaural signal. For details, refer to S709 to S711 below.

S709: Select a candidate early reflection RIR from a preset early reflection RIR library, and determine a distance perception correction factor based on the distance perception parameter.

S710: Correct the candidate early reflection RIR based on the distance perception correction factor, to obtain a target early reflection RIR.

S711: Perform early reflection rendering on the audio clip subsequent to the initial audio clip in the source audio signal based on the target early reflection RIR, to obtain the second binaural signal.

For example, an early reflection RIR library may be established in advance. For example, a spherical microphone may be used in advance in an acoustic environment corresponding to a space scenario to separately collect responses made when a sound source is located at p2 (p2 is a positive integer) positions in the acoustic environment corresponding to the space scenario, to obtain RIRs at the p2 positions. Then, a former part of impulse responses of a reflection path between the sound source and the spherical microphone in the RIRs at the p2 positions is separately determined, to obtain early reflection RIRs (namely, HOA RIRs) at the p2 positions. Then, the early reflection RIRs at the p2 positions may be used to constitute early reflection RIRs corresponding to a space scenario (for ease of description, the early reflection RIRs corresponding to a space scenario are referred to as a second set). The second set may be represented as follows:

$$\left[ ER_{1-AMB}\left(t, r_1, \theta_1, \varphi_1\right), ER_{2-AMB}\left(t, r_2, \theta_2, \varphi_2\right), ..., ER_{p2-AMB}\left(t, r_{p2}, \theta_{p2}, \varphi_{p2}\right) \right]$$

One second set may include preset early reflection RIRs at the p2 positions.

Based on the foregoing manner, for m2 space scenarios, m2 second sets may be obtained through recording, where m2 is a positive integer. Then, the m2 second sets are used to constitute the early reflection RIR library. The early reflection RIR library may be represented as follows:

$$\left[ ER_{1-AMB}\left(t, r_1, \theta_1, \varphi_1\right), ER_{2-AMB}\left(t, r_2, \theta_2, \varphi_2\right), ..., ER_{p2-AMB}\left(t, r_{p2}, \theta_{p2}, \varphi_{p2}\right) \right]_{1,2,..,m2}$$

For example, a second set corresponding to the space scenario parameter may be selected from the m2 second sets of the early reflection RIR library as a second target set.

For example, when head position information of the user cannot be obtained, the candidate early reflection RIR may be selected from the second target set based on position information of a currently-processed audio signal (namely, the audio clip subsequent to the initial audio clip in the source audio signal) in the source audio signal and position information of the preset early reflection RIRs at the p2 positions in the second target set. For example, a preset early reflection RIR whose position information is closest to the position information of the currently-processed audio signal (namely, the audio clip subsequent to the initial audio clip in the source audio signal) in the source audio signal may be selected from the second target set as the candidate early reflection RIR.

For example, when the head position information of the user may be obtained, the candidate early reflection RIR may be selected from the second target set based on the head position information of the user, position information of the currently-processed audio signal (namely, the audio clip subsequent to the initial audio clip in the source audio signal) in the source audio signal, and the position information of preset early reflection RIRs at the p2 positions in the second target set. For example, an offset value between the position information of the currently-processed audio signal (namely, the audio clip subsequent to the initial audio clip in the source audio signal) in the source audio signal and the head position information of the user may be determined, and then a preset early reflection RIR whose position information is closest to the offset value may be selected from the second target set as the candidate early reflection RIR. In this way, head tracking rendering can be implemented.

For example, the distance perception correction factor may be determined based on a second effect parameter in the rendering effect parameter. Then, the candidate early reflection RIR is corrected based on the distance perception correction factor, to obtain the target early reflection RIR. For the target early reflection RIR, refer to the following formula:

$$ER' = \beta \cdot ER$$

*ER'* is the target early reflection RIR, $\beta$ is the sound image position correction factor, and *ER* is the candidate early reflection RIR.

For example, $\beta$ may be represented by a gain. An amplitude of the candidate early reflection RIR is increased to reduce the distance perception.

Further, the candidate early reflection RIR is corrected based on the distance perception correction factor, so that the distance perception can be adjusted.

For example, convolution may be performed on the target early reflection RIR and the audio clip subsequent to the initial audio clip in the source audio signal, so that early reflection rendering is performed on the audio clip subsequent to the initial audio clip in the source audio signal, to obtain the second binaural signal. For a part $in$ $(t,,\theta_i,\varphi_1)$ corresponding to the audio clip subsequent to the initial audio clip in the $i^{th}$ audio signal of the source audio signal, early reflection rendering may be performed according to the following formula:

$$out_{2i}\left(t,r_i,\theta_i,\varphi_i\right) = in\left(t,r_i,\theta_i,\varphi_i\right) * ER_{BIN}'\left(t,r_i,\theta_i,\varphi_i\right)$$

In the foregoing formula, "*" represents convolution. $out_2,(t,r_i,\theta_i,\varphi_i)$ is data obtained by performing early reflection rendering on the audio clip subsequent to the initial audio clip in the $i^{th}$ piece of audio data of the source audio signal, and $ER_{BIN}'(t,r_i,\theta_i,\varphi_i)$ is the target early reflection RIR.

If the source audio signal includes N (N is an integer greater than 1) channels, the second binaural signal $out_2(t)$ obtained by performing early reflection rendering on the audio clip subsequent to the initial audio clip in the source audio signal may be as follows:

$$out_2\left(t\right) = \sum_{i=1}^{n} in\left(t,r_i,\theta_i,\varphi_i\right) * ER_{BIN}'\left(t,r_i,\theta_i,\varphi_i\right)$$

S712: Adjust a spatial perception parameter based on a setting operation for the spatial perception option.

For example, a rendering effect parameter corresponding to the spatial perception option may be referred to as the spatial perception parameter.

Refer to (1) in FIG. 6. For example, a slider position of the spatial perception option 521 may be determined based on a setting operation performed by the user on the spatial perception option 521, and then the spatial perception parameter is adjusted based on the slider position of the spatial perception option 521.

It should be noted that adjusting the spatial perception parameter means adjusting a parameter value of the spatial perception parameter.

For example, late reflection rendering may be performed on the audio clip subsequent to the initial audio clip in the source audio signal based on the spatial perception parameter, to obtain a third binaural signal. For details, refer to S713 to S715 below.

S713: Select a candidate late reflection RIR from a preset late reflection RIR library, and determine a spatial perception correction factor based on the spatial perception parameter.

S714: Correct the candidate late reflection RIR based on the spatial perception correction factor, to obtain a target late reflection RIR.

S715: Perform late reflection rendering on the audio clip subsequent to the initial audio clip in the source audio signal based on the target late reflection RIR, to obtain the third binaural signal.

For example, a late reflection RIR library may be established in advance. For example, a spherical microphone may be used in advance in an acoustic environment corresponding to a space scenario to separately collect responses made when a sound source is located at p3 (p3 is a positive integer) positions in the acoustic environment corresponding to the space scenario, to obtain RIRs at the p3 positions. Then, a latter part of impulse responses of a reflection path between the sound source and the spherical microphone in the RIRs at the p3 positions is separately determined, to obtain late reflection RIRs (namely, HOA RIRs) at the p3 positions. Then, the late reflection RIRs at the p3 positions may be used to constitute late reflection RIRs corresponding to a space scenario (for ease of description, the late reflection RIRs corresponding to a space scenario are referred to as a third set). The third set may be represented as follows:

$$\left[LR_{1-AMB}\left(t,r_1,\theta_1,\varphi_1\right), LR_{2-AMB}\left(t,r_2,\theta_2,\varphi_2\right),..., LR_{p2-AMB}\left(t,r_{p3},\theta_{p3},\varphi_{p3}\right)\right]$$

One third set may include preset late reflection RIRs at the p3 positions.

Based on the foregoing manner, for m3 space scenario types, m3 third sets may be obtained through collection, where m3 is a positive integer. Then, the m3 third sets are used to constitute the late reflection RIR library. The late reflection RIR library may be represented as follows:

$$\left[LR_{1-AMB}\left(t,r_1,\theta_1,\varphi_1\right), LR_{2-AMB}\left(t,r_2,\theta_2,\varphi_2\right),..., LR_{p3-AMB}\left(t,r_{p3},\theta_{p3},\varphi_{p3}\right)\right]_{1,2,..,m3}$$

It should be noted that m2 may be equal to m3.

For example, a third set corresponding to the space scenario parameter may be selected from the m3 third sets of the late reflection RIR library as a third target set.

For example, when head position information of the user cannot be obtained, the candidate late reflection RIR may be selected from the third target set based on position information of a currently-processed audio signal (namely, the audio clip subsequent to the initial audio clip in the source audio signal) in the source audio signal and position information of the preset late reflection RIRs at the p3 positions in the third target set. For example, a preset late reflection RIR whose position information is closest to the position information of the currently-processed audio signal (namely, the audio clip subsequent to the initial audio clip in the source audio signal) in the source audio signal may be selected from the third target set as the candidate late reflection RIR.

For example, when the head position information of the user may be obtained, the candidate late reflection RIR may be selected from the third target set based on the head position information of the user, position information of the currently-processed audio signal (namely, the audio clip subsequent to the initial audio clip in the source audio signal) in the source audio signal, and the position information of preset late reflection RIRs at the p3 positions in the third target set. For example, an offset value between the position information of the currently-processed audio signal (namely, the audio clip subsequent to the initial audio clip in the source audio signal) in the source audio signal and the head position information of the user may be determined, and then a preset late reflection RIR whose position information is closest to the offset value may be selected from the third target set as the candidate late reflection RIR. In this way, head tracking rendering can be implemented.

For example, the spatial perception correction factor may be determined based on a third effect parameter in the rendering effect parameter. Then, the candidate late reflection RIR is corrected based on the spatial perception correction factor, to obtain the target late reflection RIR. For the target late reflection RIR, refer to the following formula:

$$LR' = \gamma \cdot LR$$

LR' is the target late reflection RIR, $\gamma$ is the sound image position correction factor, and *LR* is the candidate late reflection RIR.

For example, $\gamma$ may be represented by a gain. An amplitude of the candidate late reflection RIR is increased to increase the spatial perception.

Further, the candidate late reflection RIR is corrected based on the spatial perception correction factor, so that the spatial perception can be adjusted.

For example, convolution may be performed on the target late reflection RIR and the audio clip subsequent to the initial audio clip in the source audio signal, so that late reflection rendering is performed on the audio clip subsequent to the initial audio clip in the source audio signal, to obtain the third binaural signal. For the audio clip *in (t, $r_i, \theta_i, \varphi_i$)* subsequent to the initial audio clip in the i$^{th}$ audio signal of the source audio signal, late reflection rendering may be performed according to the following formula:

$$out_{3i}\left(t, r_i, \theta_i, \varphi_i\right) = in\left(t, r_i, \theta_i, \varphi_i\right) * LR_{BIN}'\left(t, r_i, \theta_i, \varphi_i\right)$$

In the foregoing formula, "*" represents convolution. $out_{3i}(t, r_i, \theta_i, \varphi_i)$ is data obtained by performing late reflection rendering on the audio clip subsequent to the initial audio clip in the i$^{th}$ piece of audio data of the source audio signal, and $LR_{BIN}'(t, r_i, \theta_i, \varphi_i)$ is the target late reflection RIR.

If the source audio signal includes N (N is an integer greater than 1) channels, the third binaural signal $out_3(t)$ obtained by performing late reflection rendering on the audio clip subsequent to the initial audio clip in the source audio signal may be as follows:

$$out_3\left(t\right) = \sum_{i=1}^{n} in\left(t, r_i, \theta_i, \varphi_i\right) * LR_{BIN}'\left(t, r_i, \theta_i, \varphi_i\right)$$

S716: Determine a target binaural signal based on the first binaural signal, the second binaural signal, and the third binaural signal.

For example, for S716, refer to the descriptions of S305. Details are not described herein again.

It should be noted that S704 to S707, S708 to S711, and S712 to S715 may be performed in parallel or in series.

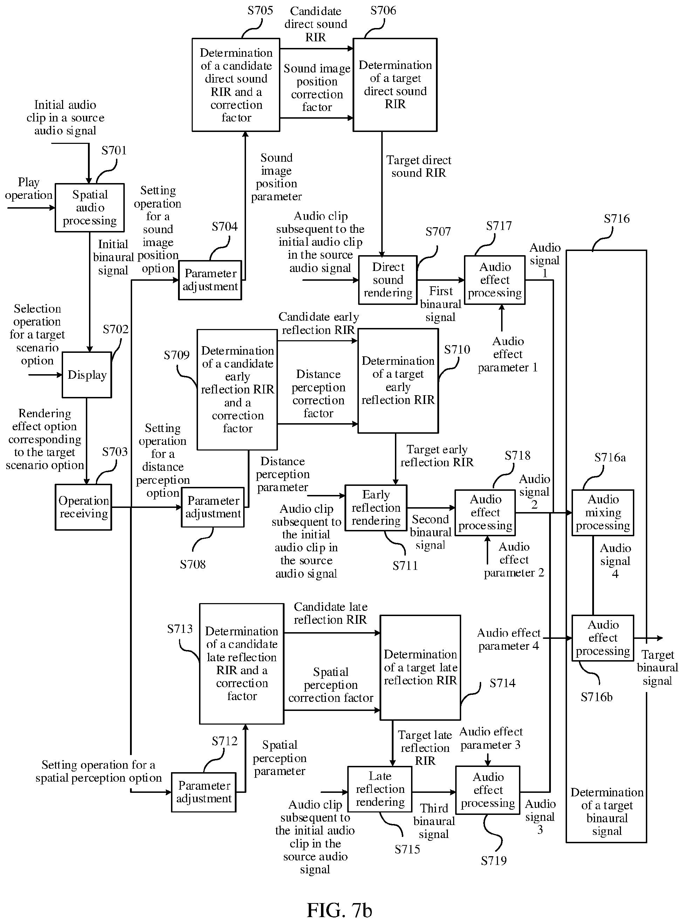

FIG. 7b is a diagram of an example of an audio processing process. Based on FIG. 7a, after the first binaural signal, the second binaural signal, and the third binaural signal are obtained, audio effect processing may be performed on the first binaural signal, the second binaural signal, and the third binaural signal, to modify an audio.

For example, correspondences between a plurality of space scenarios and a plurality of audio effect parameter groups may be established in advance, to obtain preset relationships. For example, the preset relationship may include cinema-audio effect parameter group 1, concert hall-audio effect parameter group 2, recording studio-audio effect parameter group 3, and KTV-audio effect parameter group 4. Each audio effect parameter group may include a plurality of audio effect parameters.

For example, an audio effect parameter group matching a scenario parameter (a scenario parameter updated based on the target scenario option) may be determined based on the preset relationship.

For example, the audio effect parameter group matching the scenario parameter may include a direct sound audio effect parameter (an audio effect parameter 1), an early reflection audio effect parameter (an audio effect parameter 2), a late reflection audio effect parameter (an audio effect parameter 3), and a first mixed audio effect parameter (an audio effect parameter 4).

Refer to FIG. 7b. For example, in S717, audio effect processing is performed on the first binaural signal based on the audio effect parameter 1, to obtain an audio signal 1.

For example, S717 may be performed after S707 and before S716. To be specific, after the first binaural signal is obtained, audio effect processing may be performed on the first binaural signal, to obtain the audio signal 1. For details, refer to the descriptions of S306. Details are not described herein again.

Refer to FIG. 7b. For example, in S718, audio effect processing is performed on the second binaural signal based on the audio effect parameter 2, to obtain an audio signal 2.

For example, S718 is performed after S711 and before S716. To be specific, after the second binaural signal is obtained, audio effect processing may be performed on the second binaural signal, to obtain the audio signal 2. For details, refer to the descriptions of S307. Details are not described herein again.

Refer to FIG. 7b. For example, in S719, audio effect processing is performed on the third binaural signal based on the audio effect parameter 3, to obtain an audio signal 3.

For example, S719 is performed after S715 and before S716. To be specific, after the third binaural signal is obtained, audio effect processing may be performed on the third binaural signal, to obtain the audio signal 3. For details, refer to the descriptions of S308. Details are not described herein again.

Refer to FIG. 7b. For example, S716 may include S716a and S716b.

S716a: Perform audio mixing processing on the audio signal 1, the audio signal 2, and the audio signal 3, to obtain an audio signal 4.

S716b: Perform audio effect processing on the audio signal 4 based on the audio effect parameter 4, to obtain the target binaural signal.

For example, for S716a and S716b, refer to S305a and S305b. For details, refer to the foregoing descriptions. Details are not described herein again.

For example, based on (1) in FIG. 6, with reference to the method described in the embodiment of FIG. 4a, direct sound rendering, early reflection rendering, and late reflection rendering are separately performed on the audio clip subsequent to the initial audio clip in the source audio signal, so that spatial audio processing in S603 can be implemented. To be specific, direct sound rendering, early reflection rendering, and late reflection rendering are separately performed on the audio clip subsequent to the initial audio clip in the source audio signal based on the setting, to obtain the target binaural signal. In this way, in any type of space scenario, a high-precision sound image position, and spatial perception and distance perception of an audio can be restored, and a more realistic and immersive binaural rendering effect can be further achieved.

The following describes a process of performing direct sound rendering, early reflection rendering, and late reflection rendering on the audio clip subsequent to the initial audio clip in the source audio signal based on the setting.

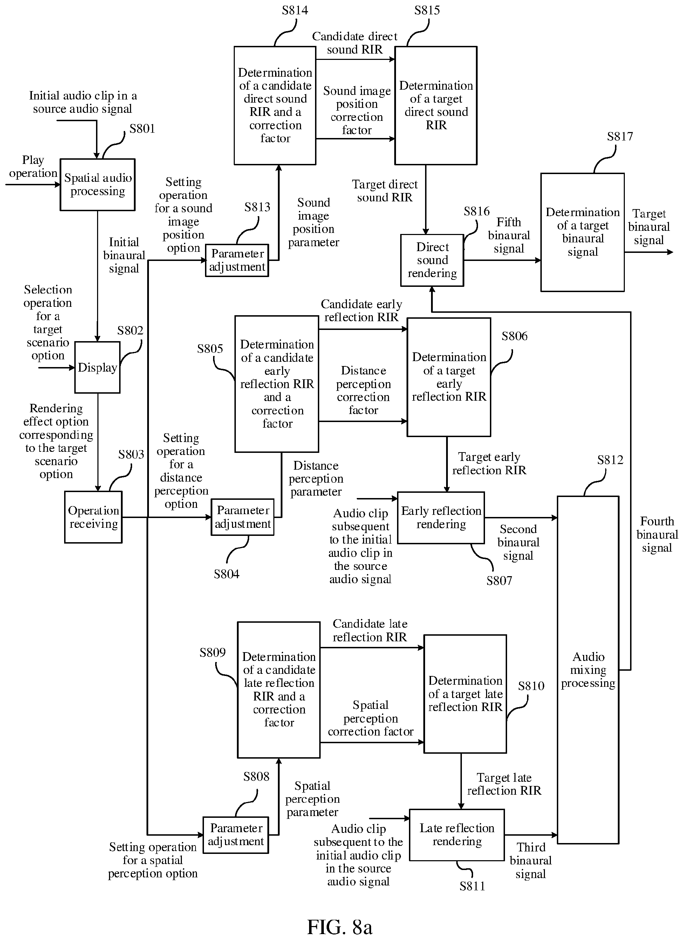

FIG. 8a is a diagram of an example of an audio processing process. An embodiment of FIG. 8a describes a manner of performing direct sound rendering, early reflection rendering, and late reflection rendering on an audio clip subsequent to an initial audio clip in a source audio signal.

S801: In response to a play operation of a user, perform spatial audio processing on the initial audio clip in the source audio signal to obtain an initial binaural signal, and play the initial binaural signal, where the source audio signal is a media file.

S802: In response to a selection operation performed by the user on a target scenario option, display a rendering effect option corresponding to the target scenario option.

S803: Receive a setting operation performed by the user on the rendering effect option, where the rendering effect option includes a sound image position option, a distance perception option, and a spatial perception option.

For example, for S801 to S803, refer to the descriptions of S701 to S703. Details are not described herein again.

S804: Adjust a distance perception parameter based on a setting operation for the distance perception option.

S805: Select a candidate early reflection RIR from a preset early reflection RIR library, and determine a distance perception correction factor based on the distance perception parameter.

S806: Correct the candidate early reflection RIR based on the distance perception correction factor, to obtain a target early reflection RIR.

S807: Perform early reflection rendering on the audio clip subsequent to the initial audio clip in the source audio signal based on the target early reflection RIR, to obtain a second binaural signal.

For example, for S804 to S807, refer to the foregoing descriptions of S708 to S711. Details are not described herein again.

S808: Adjust a spatial perception parameter based on a setting operation for the spatial perception option.

S809: Select a candidate late reflection RIR from a preset late reflection RIR library, and determine a spatial perception correction factor based on the spatial perception parameter.

S810: Correct the candidate late reflection RIR based on the spatial perception correction factor, to obtain a target late reflection RIR.

S811: Perform late reflection rendering on the audio clip subsequent to the initial audio clip in the source audio signal based on the target late reflection RIR, to obtain a third binaural signal.

For example, for S808 to S811, refer to the foregoing descriptions of S712 to S715. Details are not described herein again.

S812: Perform audio mixing processing on the second binaural signal and the third binaural signal, to obtain a fourth binaural signal.

For example, for S812, refer to the descriptions of S405. Details are not described herein again.

S813: Adjust a sound image position parameter based on a setting operation for the sound image position option.

S814: Select a candidate direct sound RIR from a preset direct sound RIR library, and determine a sound image position correction factor based on the sound image position parameter.

S815: Correct the candidate direct sound RIR based on the sound image position correction factor, to obtain a target direct sound RIR.

S816: Perform direct sound rendering on the fourth binaural signal based on the target direct sound RIR, to obtain a fifth binaural signal.

For example, for S813 to S816, refer to the foregoing descriptions of S704 to S707. Details are not described herein again.

S817: Determine a target binaural signal based on the fifth binaural signal.

For example, for S817, refer to the descriptions of S407. Details are not described herein again.

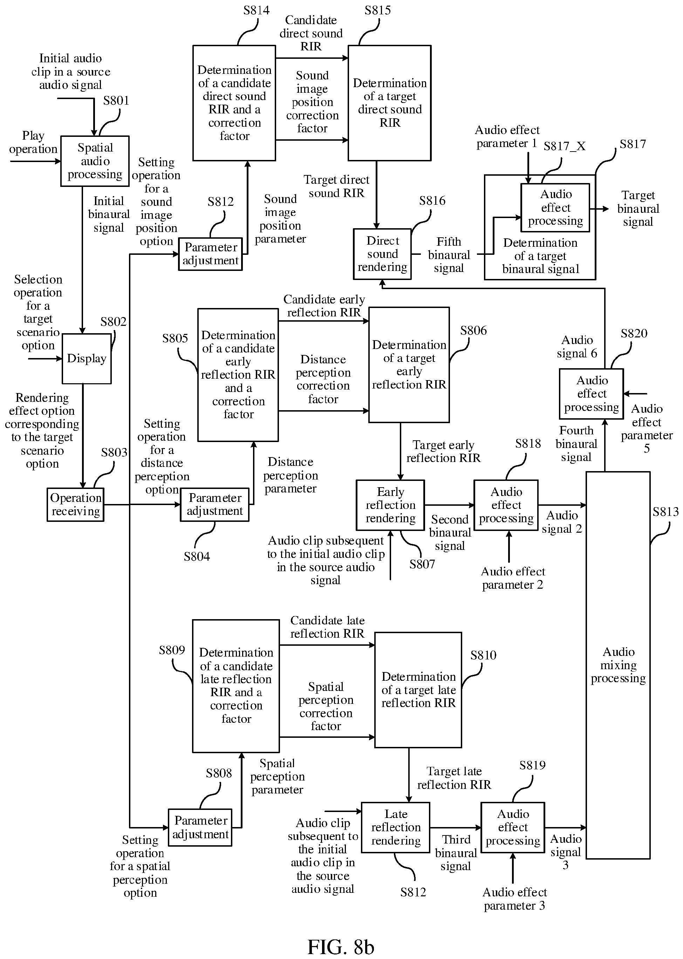

FIG. 8b is a diagram of an example of an audio processing process. Based on FIG. 8a, after the second binaural signal, the third binaural signal, the fourth binaural signal, and the fifth binaural signal are obtained, audio effect processing is performed on the second binaural signal, the third binaural signal, the fourth binaural signal, and the fifth binaural signal, to modify an audio.

For example, an audio effect parameter group matching a space scenario parameter is determined based on a preset relationship. For details, refer to the foregoing descriptions. Details are not described herein again.

For example, the audio effect parameter group matching the space scenario parameter may include a direct sound audio effect parameter (an audio effect parameter 1), an early reflection audio effect parameter (an audio effect parameter 2), a late reflection audio effect parameter (an audio effect parameter 3), and a second mixed audio effect parameter (an audio effect parameter 5).

Refer to FIG. 8b. For example, in S818, audio effect processing is performed on the second binaural signal based on the audio effect parameter 2, to obtain an audio signal 2.

For example, S818 is performed after S807 and before S813. To be specific, after the second binaural signal is obtained, audio effect processing may be performed on the second binaural signal to obtain the audio signal 2. For details, refer to the descriptions of S307. Details are not described herein again.

Refer to FIG. 8b. For example, in S819, audio effect processing is performed on the third binaural signal based on the audio effect parameter 3, to obtain an audio signal 3.

For example, S819 is performed after S812 and before S813. To be specific, after the third binaural signal is obtained, audio effect processing may be performed on the third binaural signal, to obtain the audio signal 3. For details, refer to the descriptions of S308. Details are not described herein again.

For example, S813 may include: performing audio mixing processing on the audio signal 2 and the audio signal 3, to obtain the fourth binaural signal.

Refer to FIG. 8b. For example, in S820, audio effect processing is performed on the fourth binaural signal based on the audio effect parameter 5, to obtain an audio signal 6.

For example, S820 is performed after S813 and before S816. To be specific, after the fourth binaural signal is obtained, audio effect processing may be performed on the fourth binaural signal, to obtain the audio signal 6. For details, refer to the descriptions of S409. Details are not described herein again.

Refer to FIG. 8b. For example, S817 may include S817_X. In S817_X, audio effect processing is performed on the fifth binaural signal based on the audio effect parameter 1, to obtain the target binaural signal. For details, refer to the foregoing descriptions. Details are not described herein again.

It should be noted that when the user performs a setting operation on only a part of rendering effect options, a part of rendering effect parameters may be adjusted based on the setting operation for the part of rendering effect options. For a rendering effect option that is not performed by the user, rendering may be performed based on a default parameter value of a corresponding rendering effect parameter.

For example, when the user performs a setting operation on only the sound image position option, the sound image position parameter may be adjusted based on the setting operation for the sound image position option. Direct sound rendering is performed on the audio clip subsequent to the initial audio clip in the source audio signal based on a parameter value of an adjusted sound image position parameter, to obtain the first binaural signal (or direct sound rendering is performed on the fourth binaural signal based on a parameter value of an adjusted sound image position parameter, to obtain the fifth binaural signal). Then, early reflection rendering is performed on the audio clip subsequent to the initial audio clip in the source audio signal based on a default value of the distance perception parameter, to obtain the second binaural signal, and late reflection rendering is performed on the audio clip subsequent to the initial audio clip in the source audio signal based on a default value of the spatial perception parameter, to obtain the third binaural signal.

For example, when the user performs a setting operation on only the distance perception option, the distance perception parameter may be adjusted based on the setting operation for the distance perception option. Early reflection rendering is performed on the audio clip subsequent to the initial audio clip in the source audio signal based on a parameter value of an adjusted distance perception parameter, to obtain the second binaural signal. Then, direct sound rendering is performed on the audio clip subsequent to the initial audio clip in the source audio signal based on a default value of the sound image position parameter, to obtain the first binaural signal (or direct sound rendering is performed on the fourth binaural signal based on a default value of the sound image position parameter, to obtain the fifth binaural signal), and late reflection rendering is performed on the audio clip subsequent to the initial audio clip in the source audio signal based on the default value of the spatial perception parameter, to obtain the third binaural signal.

For example, when the user performs a setting operation on only the spatial perception option, the distance perception parameter may be adjusted based on the setting operation for the spatial perception option. Late reflection rendering is performed on the audio clip subsequent to the initial audio clip in the source audio signal based on a parameter value of an adjusted spatial perception parameter, to obtain the third binaural signal. Then, direct sound rendering is performed on the audio clip subsequent to the initial audio clip in the source audio signal based on the default value of the sound image position parameter, to obtain the first binaural signal (or direct sound rendering is performed on the fourth binaural signal based on the default value of the sound image position parameter, to obtain the fifth binaural signal), and early reflection rendering is performed on the audio clip subsequent to the initial audio clip in the source audio signal based on the default value of the distance perception parameter, to obtain the second binaural signal. By analogy, details are not described herein again.

In a possible implementation, an audio processing method provided in this application may be applied to earphones. In this case, the earphones may obtain a source audio signal and an audio processing parameter (the audio processing parameter may be a parameter used for spatial audio processing, and the audio processing parameter may include a rendering effect parameter, an audio effect parameter group, a correction factor, and the like) from a mobile terminal connected to the earphones; then perform a step of performing spatial audio processing on an audio clip subsequent to an initial audio clip in the source audio signal based on the audio processing parameter, to obtain a target binaural signal; and then, play the target binaural signal.

For example, when a sensor (for example, a gyroscope or an inertial sensor) for collecting head motion information may be disposed in the earphones, the earphones may determine head position information of a user based on the collected head motion information; and then may perform spatial audio processing on the audio clip subsequent to the initial audio clip in the source audio signal based on the audio processing parameter and the head position information, to obtain the target binaural signal.

In a possible implementation, an audio processing method provided in this application may be applied to a mobile terminal. In this case, the mobile terminal may obtain a source audio signal and an audio processing parameter through interaction with a user, and then perform a step of performing spatial audio processing on an audio clip subsequent to an initial audio clip in the source audio signal based on the audio processing parameter, to obtain a target binaural signal. After obtaining the target binaural signal, the mobile terminal may send the target binaural signal to earphones connected to the mobile terminal, and the earphones play the target binaural signal.

For example, the mobile terminal may obtain head position information from the earphones connected to the mobile terminal, and then perform spatial audio processing on the audio clip subsequent to the initial audio clip in the source audio signal based on the audio processing parameter and the head position information, to obtain the target binaural signal.

In a possible implementation, an audio processing method provided in this application may be applied to a VR device. In this case, the VR device may obtain a source audio signal and an audio processing parameter through interaction with a user, and then perform a step of performing spatial audio processing on an audio clip subsequent to an initial audio clip in the source audio signal based on the audio processing parameter, to obtain a target binaural signal. Then, the VR device may play the target binaural signal (or send the target binaural signal to earphones, and the earphones play the target binaural signal).

For example, when a sensor (for example, a gyroscope or an inertial sensor) for collecting head motion information may be disposed in the VR device, the VR device may determine head position information of the user based on the collected head motion information; and then may perform spatial audio processing on the audio clip subsequent to the initial audio clip in the source audio signal based on the audio processing parameter and the head position information, to obtain the target binaural signal (or obtain head position information from the earphones connected to the VR device, and then perform spatial audio processing on the audio clip subsequent to the initial audio clip in the source audio signal based on the audio processing parameter and the head position information, to obtain the target binaural signal).

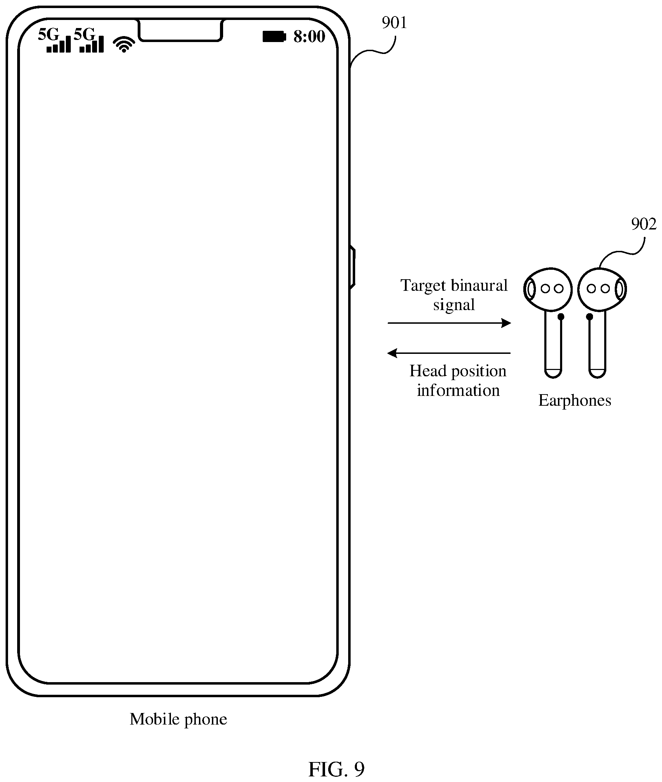

FIG. 9 is a diagram of an example of an audio processing system. FIG. 9 shows an audio processing system according to an embodiment of this application. The audio processing system includes a mobile terminal and earphones 902 connected to the mobile terminal 901.

The mobile terminal 901 is configured to: perform the audio processing method in the foregoing embodiments, and send a target binaural signal to the earphones.

The earphones 902 are configured to play the target binaural signal.

For example, the earphones 902 are configured to: collect head motion information of a user, determine head position information of the user based on the head motion information, and send the head position information to the mobile terminal.

The mobile terminal 901 is configured to perform spatial audio processing on an audio clip subsequent to an initial audio clip in a source audio signal based on a setting and the head position information, to obtain the target binaural signal.

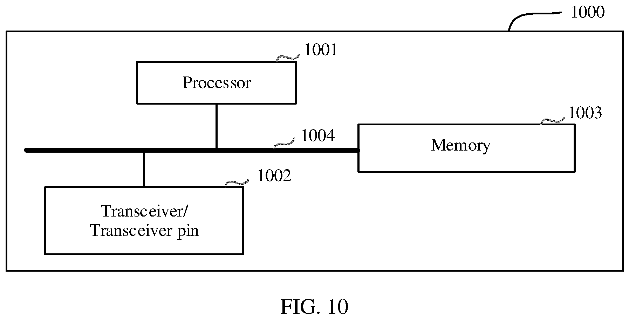

In an example, FIG. 10 is a block diagram of an apparatus 1000 according to an embodiment of this application. The apparatus 1000 may include a processor 1001 and a transceiver/transceiver pin 1002, and optionally, further include a memory 1003.

Components of the apparatus 1000 are coupled together through a bus 1004. In addition to a data bus, the bus 1004 further includes a power bus, a control bus, and a status signal bus. However, for clear description, various buses are referred to as the bus 1004 in the figure.

Optionally, the memory 1003 may be configured to store instructions in the foregoing method embodiments. The processor 1001 may be configured to: execute the instructions in the memory 1003, control a receive pin to receive a signal, and control a transmit pin to send a signal.

The apparatus 1000 may be the electronic device or a chip of the electronic device in the foregoing method embodiments.

All related content of the steps in the foregoing method embodiments may be cited in function descriptions of a corresponding function module. Details are not described herein again.

This embodiment further provides a computer-readable storage medium. The computer-readable storage medium stores computer instructions. When the computer instructions are run on an electronic device, the electronic device is enabled to perform the related method steps, to implement the audio processing method in the foregoing embodiments.

This embodiment further provides a computer program product. When the computer program product runs on a computer, the computer is enabled to perform the related steps, to implement the audio processing method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the audio processing method in the foregoing method embodiments.

The electronic device, the computer-readable storage medium, the computer program product, or the chip provided in this embodiment is configured to perform the corresponding method provided above. Therefore, for beneficial effects that can be achieved, refer to the beneficial effects in the corresponding method provided above. Details are not described herein.

Based on the descriptions of the foregoing implementations, persons skilled in the art may understand that, for a purpose of convenient and brief description, division into the foregoing functional modules is used as an example for illustration. In actual application, the foregoing functions may be allocated to different functional modules and implemented based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions in embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

Any content of embodiments of this application and any content of a same embodiment may be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, persons of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

Persons skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any usable medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, persons of ordinary skill in the art may further make modifications without departing from the purposes of this application and the protection scope of the claims, and all the modifications shall fall within the protection of this application.

**Claims**

1. An audio processing method, wherein the method comprises:

   in response to a play operation of a user, performing spatial audio processing on an initial audio clip in a source audio signal to obtain an initial binaural signal, and playing the initial binaural signal, wherein the source audio signal is a media file;
   receiving a setting of the user for a rendering effect option, wherein the rendering effect option comprises at least one of the following: a sound image position option, a distance perception option, or a spatial perception option; and

continuing to perform spatial audio processing on an audio clip subsequent to the initial audio clip in the source audio signal based on the setting, to obtain a target binaural signal.

2. The method according to claim 1, wherein when the rendering effect option comprises the sound image position option, the continuing to perform spatial audio processing on an audio clip subsequent to the initial audio clip in the source audio signal based on the setting, to obtain a target binaural signal comprises:

adjusting a sound image position parameter based on a setting for the sound image position option;
performing direct sound rendering on the audio clip subsequent to the initial audio clip in the source audio signal based on the sound image position parameter, to obtain a first binaural signal; and
determining the target binaural signal based on the first binaural signal.

3. The method according to claim 1, wherein when the rendering effect option comprises the distance perception option, the continuing to perform spatial audio processing on an audio clip subsequent to the initial audio clip in the source audio signal based on the setting, to obtain a target binaural signal comprises:

adjusting a distance perception parameter based on a setting for the distance perception option;
performing early reflection rendering on the audio clip subsequent to the initial audio clip in the source audio signal based on the distance perception parameter, to obtain a second binaural signal; and
determining the target binaural signal based on the second binaural signal.

4. The method according to claim 1, wherein when the rendering effect option comprises the spatial perception option, the continuing to perform spatial audio processing on an audio clip subsequent to the initial audio clip in the source audio signal based on the setting, to obtain a target binaural signal comprises:

adjusting a spatial perception parameter based on a setting for the spatial perception option;
performing late reflection rendering on the audio clip subsequent to the initial audio clip in the source audio signal based on the spatial perception parameter, to obtain a third binaural signal; and
determining the target binaural signal based on the third binaural signal.

5. The method according to claim 3, wherein when the rendering effect option further comprises the sound image position option and the spatial perception option, the continuing to perform spatial audio processing on an audio clip subsequent to the initial audio clip in the source audio signal based on the setting, to obtain a target binaural signal further comprises:

adjusting a sound image position parameter based on a setting for the sound image position option; and
performing direct sound rendering on the audio clip subsequent to the initial audio clip in the source audio signal based on the sound image position parameter, to obtain a first binaural signal; and
adjusting a spatial perception parameter based on a setting for the spatial perception option; and performing late reflection rendering on the audio clip subsequent to the initial audio clip in the source audio signal based on the spatial perception parameter, to obtain a third binaural signal; and
the determining the target binaural signal based on the second binaural signal comprises:
performing audio mixing processing on the first binaural signal, the second binaural signal, and the third binaural signal, to obtain the target binaural signal.

6. The method according to claim 3, wherein when the rendering effect option further comprises the sound image position option and the spatial perception option, the continuing to perform spatial audio processing on an audio clip subsequent to the initial audio clip in the source audio signal based on the setting, to obtain a target binaural signal further comprises:

adjusting a spatial perception parameter based on a setting for the spatial perception option; and performing late reflection rendering on the audio clip subsequent to the initial audio clip in the source audio signal based on the spatial perception parameter, to obtain a third binaural signal; and
the determining the target binaural signal based on the second binaural signal comprises:

performing audio mixing processing on the second binaural signal and the third binaural signal, to obtain a fourth binaural signal;

adjusting a sound image position parameter based on a setting for the sound image position option; and performing direct sound rendering on the fourth binaural signal based on the sound image position parameter, to obtain a fifth binaural signal; and

determining the target binaural signal based on the fifth binaural signal.

7. The method according to claim 2, wherein the continuing to perform direct sound rendering on the audio clip subsequent to the initial audio clip in the source audio signal based on the sound image position parameter, to obtain a first binaural signal comprises:

selecting a candidate direct sound RIR from a preset direct sound RIR library, and determining a sound image position correction factor based on the sound image position parameter;

correcting the candidate direct sound RIR based on the sound image position correction factor, to obtain a target direct sound RIR; and

performing direct sound rendering on the audio clip subsequent to the initial audio clip in the source audio signal based on the target direct sound RIR, to obtain the first binaural signal.

8. The method according to claim 7, wherein the direct sound RIR library comprises a plurality of first sets, one first set corresponds to one head type, and the first set comprises preset direct sound RIRs at a plurality of positions; and the selecting a candidate direct sound RIR from a preset direct sound RIR library comprises:

selecting a first target set from the plurality of first sets based on a head type of the user; and

selecting the candidate direct sound RIR from the first target set based on head position information of the user, position information of the source audio signal, and position information of the preset direct sound RIR in the first target set.

9. The method according to claim 5 or 6, wherein before the receiving a setting of the user for a rendering effect option, the method further comprises:

obtaining selection for a target scenario option, and displaying a rendering effect option corresponding to the target scenario option.

10. The method according to claim 9, wherein the performing early reflection rendering on the audio clip subsequent to the initial audio clip in the source audio signal based on the distance perception parameter, to obtain a second binaural signal comprises:

selecting a candidate early reflection RIR from a preset early reflection RIR library, and determining a distance perception correction factor based on the distance perception parameter;

correcting the candidate early reflection RIR based on the distance perception correction factor, to obtain a target early reflection RIR; and

performing early reflection rendering on the audio clip subsequent to the initial audio clip in the source audio signal based on the target early reflection RIR, to obtain the second binaural signal.

11. The method according to claim 10, wherein the early reflection RIR library comprises a plurality of second sets, one second set corresponds to one space scenario, and the second set comprises preset early reflection RIRs at a plurality of positions; and the selecting a candidate early reflection RIR from a preset early reflection RIR library comprises:

selecting a second target set from the plurality of second sets based on a space scenario parameter corresponding to the target scenario option; and

selecting the candidate early reflection RIR from the second target set based on head position information of the user, position information of the source audio signal, and position information of the preset early reflection RIR in the second target set.

12. The method according to claim 9, wherein the performing late reflection rendering on the audio clip subsequent to the initial audio clip in the source audio signal based on the spatial perception parameter, to obtain a third binaural signal comprises:

selecting a candidate late reflection RIR from a preset late reflection RIR library, and determining a spatial perception correction factor based on the spatial perception parameter;

correcting the candidate late reflection RIR based on the spatial perception correction factor, to obtain a target late reflection RIR; and

performing late reflection rendering on the audio clip subsequent to the initial audio clip in the source audio signal based on the target late reflection RIR, to obtain the third binaural signal.

13. The method according to claim 12, wherein the late reflection RIR library comprises a plurality of third sets, one third set corresponds to one space scenario, and the third set comprises preset late reflection RIRs at a plurality of positions; and

the selecting a candidate late reflection RIR from a preset late reflection RIR library comprises:

selecting a third target set from the plurality of third sets based on a space scenario parameter corresponding to the target scenario option; and

selecting the candidate late reflection RIR from the third target set based on head position information of the user, position information of the source audio signal, and position information of the preset late reflection RIR in the third target set.

14. The method according to any one of claims 1 to 13, wherein the source audio signal comprises at least one of the following formats: a multi-channel format, a multi-object format, and an ambisonics Ambisonics format.

15. The method according to claim 10 or 11, wherein
the target early reflection RIR is a high-order ambisonics HOA RIR.

16. The method according to claim 12 or 13, wherein
the target late reflection RIR is an HOA RIR.

17. The method according to claim 8, 11, or 13, wherein

the audio processing method is applied to earphones, and the head position information is determined based on head motion information of the user collected by the earphones;

the audio processing method is applied to a mobile terminal, and the head position information is obtained from earphones connected to the mobile terminal; or

the audio processing method is applied to a virtual reality VR device, and the head position information is determined based on head motion information of the user collected by the VR device.

18. An audio processing system, wherein the audio processing system comprises a mobile terminal and earphones connected to the mobile terminal, wherein

the mobile terminal is configured to: in response to a play operation of a user, perform spatial audio processing on an initial audio clip in a source audio signal to obtain an initial binaural signal, and play the initial binaural signal, wherein the source audio signal is a media file; receive a setting of the user for a rendering effect option, wherein the rendering effect option comprises at least one of the following: a sound image position option, a distance perception option, or a spatial perception option; continue to perform spatial audio processing on an audio clip subsequent to the initial audio clip in the source audio signal based on the setting, to obtain a target binaural signal; and send the target binaural signal to the earphones; and

the earphones are configured to play the target binaural signal.

19. The system according to claim 18, wherein

the earphones are further configured to: collect head motion information of the user, determine head position information of the user based on the head motion information, and send the head position information to the mobile terminal; and

the mobile terminal is specifically configured to continue to perform spatial audio processing on the audio clip subsequent to the initial audio clip in the source audio signal based on the setting and the head position information, to obtain the target binaural signal.

20. An electronic device, comprising:

a memory and a processor, wherein the memory is coupled to the processor, wherein the memory stores program instructions, and when the program instructions are executed by the processor, the electronic device is enabled to perform the audio processing method according to any one of claims 1 to 17.

21. A chip, comprising one or more interface circuits and one or more processors, wherein the interface circuit is configured to receive a signal from a memory of an electronic device, and send the signal to the processor, the signal comprises computer instructions stored in the memory, and when the processor executes the computer instructions, the electronic device is enabled to perform the audio processing method according to any one of claims 1 to 17.

22. A computer-readable storage medium, wherein the computer-readable storage medium stores a computer program, and when the computer program is run on a computer or a processor, the computer or the processor is enabled to perform the audio processing method according to any one of claims 1 to 17.

23. A computer program product, wherein the computer program product comprises a software program, and when the software program is executed by a computer or a processor, steps of the method according to any one of claims 1 to 17 are performed.

Song: A
Singer: XXX
Lyricist: XXX/XXX

Audio signal

Earphones

Mobile phone

FIG. 1a

Audio signal                    Audio signal

VR movie picture        VR glasses

FIG. 1b

S202

S201

To-be-processed
source audio
signal

Audio
obtaining

Direct sound
rendering

Early
reflection
rendering

Late reflection
rendering

Binaural
signal

FIG. 2

FIG. 3a

FIG. 3b

FIG. 4a

Audio obtaining (S401) → To-be-processed source audio signal → Early reflection rendering (S402) → Second binaural signal → Audio mixing processing (S404); Late reflection rendering (S403) → Third binaural signal → Audio mixing processing (S404) → Fourth binaural signal → Direct sound rendering (S405) → Fifth binaural signal → Determination of a binaural signal (S406) → Binaural signal

FIG. 4b

EP 4 542 371 A1

51

52

Rendering effect

Sound
image    Distance      Spatial
position  perception  perception

521    522    523

(1)

S501                    S502   Setting of a        S503      Target
              Initial                user for a                    binaural
Play          binaural               rendering                     signal
operation     signal                 effect option
         Spatial                  Setting              Spatial
         audio                    receiving            audio
         processing                                    processing

Initial audio
clip in a source          Audio clip subsequent to the initial
audio signal              audio clip in the source audio signal

(2)

FIG. 5

(1)

FIG. 6

FIG. 7a

S705 Candidate direct sound RIR

S706

Determination of a candidate direct sound RIR and a correction factor

Sound image position correction factor

Determination of a target direct sound RIR

Initial audio clip in a source audio signal

S701

Play operation

Spatial audio processing

Setting operation for a sound image position option

Initial binaural signal

Sound image position parameter

S704

Parameter adjustment

Target direct sound RIR

Audio clip subsequent to the initial audio clip in the source audio signal

S707

Direct sound rendering

First binaural signal

S717

Audio effect processing

Audio signal 1

S716

Audio effect parameter 1

Selection operation for a target scenario option

S702

Display

Candidate early reflection RIR

S709

Determination of a candidate early reflection RIR and a correction factor

Distance perception correction factor

Determination of a target early reflection RIR

S710

Rendering effect option corresponding to the target scenario option

S703

Operation receiving

Setting operation for a distance perception option

Parameter adjustment

S708

Distance perception parameter

Audio clip subsequent to the initial audio clip in the source audio signal

Target early reflection RIR

Early reflection rendering

Second binaural signal

S711

S718

Audio effect processing

Audio signal 2

Audio effect parameter 2

S716a

Audio mixing processing

Audio signal 4

Candidate late reflection RIR

S713

Determination of a candidate late reflection RIR and a correction factor

Spatial perception correction factor

Determination of a target late reflection RIR

S714

Audio effect parameter 4

Audio effect processing

Target binaural signal

S716b

Setting operation for a spatial perception option

S712

Parameter adjustment

Spatial perception parameter

Target late reflection RIR

Audio effect parameter 3

Audio clip subsequent to the initial audio clip in the source audio signal

Late reflection rendering

Third binaural signal

S715

Audio effect processing

Audio signal 3

S719

Determination of a target binaural signal

FIG. 7b

FIG. 8a

FIG. 8b

901

902

Target binaural
signal

Head position
information

Earphones

Mobile phone

FIG. 9

1000

1001

Processor

1003

1004

Memory

1002

Transceiver/
Transceiver pin

FIG. 10

<div style="text-align:center">

**INTERNATIONAL SEARCH REPORT**

</div>

| International application No. |
|---|
| **PCT/CN2023/081669** |

**A. CLASSIFICATION OF SUBJECT MATTER**

G06F 3/16 (2006.01)i;H04S 7/00(2006.01)i

According to International Patent Classification (IPC) or to both national classification and IPC

**B. FIELDS SEARCHED**

Minimum documentation searched (classification system followed by classification symbols)

IPC: G06F,H04S,H04N

Documentation searched other than minimum documentation to the extent that such documents are included in the fields searched

Electronic data base consulted during the international search (name of data base and, where practicable, search terms used)

CNTXT, ENTXT: 交互, 界面, 调整, 选项, 场景, 位置, 按键, 音频, 空间, 距离, 声像, 直达, 早期, 晚期, 反射, 脉冲响应, 卷积, Interactions, Interfaces, Adjustments, Options, Scene, Location, Key, Audio, Spatial, Distance, Sound, Direct, Early, Late, Reflection, Impulse Response, Convolutional

**C. DOCUMENTS CONSIDERED TO BE RELEVANT**

| Category* | Citation of document, with indication, where appropriate, of the relevant passages | Relevant to claim No. |
|---|---|---|
| X | CN 111142838 A (GUANGZHOU KUGOU COMPUTER TECHNOLOGY CO., LTD.) 12 May 2020 (2020-05-12) description, paragraphs 0099-0204, and figures 1-9 | 1, 18-23 |
| Y | CN 111142838 A (GUANGZHOU KUGOU COMPUTER TECHNOLOGY CO., LTD.) 12 May 2020 (2020-05-12) description, paragraphs 0099-0204, and figures 1-9 | 2-17 |
| Y | WO 2016042410 A1 (SYMPHONOVA, LTD.) 24 March 2016 (2016-03-24) description, paragraphs 0042-0072, and figures 1-6 | 2-17 |
| Y | CN 109076305 A (DTS INC.) 21 December 2018 (2018-12-21) description, paragraphs 0036-0133, and figures 1-9 | 2-17 |
| A | US 11246002 B1 (FACEBOOK TECHNOLOGIES, L.L.C.) 08 February 2022 (2022-02-08) entire document | 1-23 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 April 2023** | **21 April 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2023/081669**

| Patent document cited in search report | | | Publication date (day/month/year) | Patent family member(s) | | | Publication date (day/month/year) |
|---|---|---|---|---|---|---|---|
| CN | 111142838 | A | 12 May 2020 | None | | | |
| WO | 2016042410 | A1 | 24 March 2016 | None | | | |
| CN | 109076305 | A | 21 December 2018 | US | 2017223478 | A1 | 03 August 2017 |
| | | | | HK | 1258156 | A1 | 08 November 2019 |
| | | | | EP | 3412039 | A1 | 12 December 2018 |
| | | | | WO | 2017136573 | A1 | 10 August 2017 |
| | | | | KR | 20180108766 | A | 04 October 2018 |
| US | 11246002 | B1 | 08 February 2022 | None | | | |

Form PCT/ISA/210 (patent family annex) (July 2022)

**EP 4 542 371 A1**

**Patent documents cited in the description**

- CN 202210813749
- CN 202310127907